# EUROPEAN PATENT SPECIFICATION

(11) **EP 1 308 930 B1**
(45) Date of publication and mention of the grant of the patent: **31.12.2008**
(21) Application number: 02257592.2
(22) Date of filing: 01.11.2002
(51) Int. Cl.: G10L 15/26, H04N 5/445

(54) **Channel selecting apparatus utilizing speech recognition, and controlling method thereof**
Kanalwahleinrichtung mittels Spracherkennung und Steuerungsverfahren dafür
Appareil de sélection de chaîne utilisant la reconnaisance de parole et procédé de contrôle associé

(30) Priority: 02.11.2001 JP 2001337659
(43) Date of publication of application: 07.05.2003
(73) Proprietor: Panasonic Corporation, Kadoma-shi Osaka 571-8501 (JP)
(72) Inventor: Kusumoto, Noritaka, Ibaraki-shi, Osaka 567-0826 (JP)
(74) Representative: Price, Paul Anthony King

(56) References cited:
- EP-A- 0 661 688
- EP-A2- 0 953 967
- WO-A-96/21990
- US-A- 5 425 128
- US-B1- 6 230 132

## Description

### BACKGROUND OF THE INVENTION

The present invention relates to a speech recognition-based channel selecting apparatus which recognizes input speech and selects a channel, and a controlling method thereof.

Over the recent years, a variety types of apparatuses utilizing speech recognition have been developed. In general, a speech recognition apparatus includes a dictionary for recognition of speech, and calculates a similarity level between input speech and a unit of language (e.g., a word) registered in the dictionary. Succeeding in extraction of a unit of language whose similarity level is at or beyond a certain similarity level and the highest, the speech recognition apparatus recognizes the input speech as thus extracted unit of language.

One of such apparatuses is a channel selecting apparatus which utilizes speech recognition.

A channel selecting apparatus utilizing speech recognition according to a prior art example 1 is explained. First, an operator inputs speech through a microphone to the channel selecting apparatus according to the prior art example 1, and inputs a unit of language which is to be correlated with the speech on a key board for instance. The channel selecting apparatus according to the prior art example 1 generates a dictionary in which voices and units of language are correlated with each other. After generating the dictionary, as the operator utters speech, the channel selecting apparatus according to the prior art example 1 selects a unit of language which is similar to the speech from the dictionary and recognizes that the speech is thus selected unit of language.

Japanese Patent Application Laid-Open Gazette No. H11-239067 describes a channel selecting apparatus utilizing speech recognition according to a prior art example 2. The channel selecting apparatus utilizing speech recognition according to the prior art example 2 comprises a dictionary of broadcasting stations all over the country. As an operator utters a phrase common to the names of broadcasting stations (for example, "NHK"), the channel selecting apparatus recognizes a plurality of broadcasting stations (for example, "NHK AKITA," "NHK SENDAI," "NHK YAMAGATA" and the like) based on the dictionary, and selects a signal which is currently being received at or beyond a certain level from among broadcasting signals from the recognized broadcasting stations. For example, when 1503 kHz signal is currently being received at or beyond a certain level, the channel selecting apparatus selects "NHK AKITA".

The document WO96/21990 discloses an information system having a terminal unit accepting voice commands. In a particular example, a television channel can be selected by uttering the command "goto channel number" or "goto channel identifier". In this document, the vocabulary data may be downloaded from an head-end installation. The vocabulary includes identifiers for local stations.

The document US 5,844,633 illustrates a channel memory device for storing the allocation of channel numbers and station names in a list of preset positions.

When using a home-use apparatus such as a channel selecting apparatus of a television set which comprises a speech recognition apparatus , an operator very much hates a cumbersome job of generating a dictionary on his or her own. Hence, there is a strong demand for a channel selecting apparatus in which a dictionary for speech recognition has been incorporated in advance, instead of such a channel selecting apparatus as that according to the prior art example 1 which requires an operator to build a dictionary on his or her own.

A dictionary listing up the names of broadcasting stations all over Japan (a large dictionary which contains, as objects of recognition, even those words such as the names of broadcasting stations whose signal cannot be received) is incorporated in the channel selecting apparatus according to the prior art example 2 in advance. In general, a speech recognition apparatus calculates a similarity level between input speech and each unit of language registered in a dictionary, extracts a unit of language whose similarity level is at or beyond a certain similarity level and is the highest, and recognizes that the input speech is thus selected unit of language. Hence, the larger the built-in dictionary becomes, the larger the amount of calculation becomes which is executed by the speech recognition apparatus to calculate a similarity level between input speech and each unit of language registered in the dictionary. This leads to a problem that processing time required by a microcomputer for similarity level calculation becomes long and speech recognition accordingly slows down. There is a problem that calculation of similarity levels demands to use an expensive microcomputer whose processing speed is fast.

There is therefore a need to provide an inexpensive speech recognition-based channel selecting apparatus which does not demand cumbersome registration of words, which automatically generates a requisite and sufficient dictionary of a small size suited to user's resident location, whose speech recognition speech is fast, and also providing a controlling method thereof.

A prior art channel selecting apparatus utilizing speech recognition needs to comprise a table which contains units of languages expressing all receive channels, a table which contains units of language expressing broadcasting station identifiers for all broadcasting stations in Japan, and/or a table which contains units of language expressing the names, abbreviated names or common names of all broadcasting stations in Japan. For instance, a channel selecting apparatus does not need the names and the like of broadcasting stations other than the names and the like of broadcasting stations whose signal is receivable. A prior art channel selecting apparatus utilizing speech recognition however comprises a table in which a large volume is of no use.

For instance, in the event that the abbreviated name of a broadcasting station expresses a plurality of broadcasting stations (The unit of language "NHK" for example denotes NHK TOKYO which is the main broadcasting station, NHK OSAKA, NHK NAGOYA, etc.), it is not possible to specify a receive channel from this abbreviated name. Because of this, it is not possible to register abbreviated names and the like which express a plurality of broadcasting stations in a prior art channel selecting apparatus utilizing speech recognition.

However, an operator often refers to a broadcasting station by the abbreviated name. When audience living in Osaka City watches programs aired from "NHK", this means to watch programs aired by NHK OSAKA (where the receive channel is Channel 2), but does not mean to watch programs aired by NHK TOKYO, the main station (where the receive channel is Channel 1).

Accordingly, an aspect of the present invention is to provide a speech recognition-based channel selecting apparatus which automatically generates a compact table which is proper for user's (viewer's, operator's) resident location, and to provide a controlling method thereof.

There is also a need to provide a speech recognition-based channel selecting apparatus which automatically generates a table in which an abbreviated name and the like expressing a plurality of broadcasting stations is correlated with the receive channel for one among a plurality of broadcasting stations, whose service area is a local area that a user lives, and the present invention aims at providing a controlling method thereof.

### BRIEF SUMMARY OF THE INVENTION

A channel selecting apparatus utilizing speech recognition according to one aspect of the present invention comprises: a table in which a display channel is correlated with a unit of language which represents the display channel; a channel setting information storing unit which stores a channel selecting position, a receive channel and a display channel in mutual correlation with each other; a dictionary containing a registration of a unit of language representing the display channel which is correlated with the channel selecting position; a dictionary generating unit which, when the channel setting information storing unit correlates the new display channel with the channel selecting position, automatically searches for a unit of language which represents the display channel newly correlated with the channel selecting position from the table, then registers a searched word in the dictionary and accordingly updates the dictionary; a speech inputting unit of inputting speech; a speech recognition unit which recognizes the speech inputted based on the dictionary, and outputs a recognition result; and a channel selection controlling unit which receives the recognition result, and when the recognition result is the unit of language which represents the display channel, receives a signal for the receive channel correlated with the same channel selecting position as the channel selecting position correlated with the display channel, and outputs the signal.

A method of controlling a channel selecting apparatus utilizing speech recognition according to other aspect of the present invention comprises: a table in which a display channel is correlated with a unit of language which represents the display channel; a channel setting information storing unit which stores a channel selecting position, a receive channel and a display channel in mutual correlation with each other; and a dictionary containing a registration of a unit of language representing the display channel which is correlated with the channel selecting position, the method being characterized in comprising: a dictionary generating step of automatically searching for, when the channel setting information storing unit correlates the new display channel with the channel selecting position, a unit of language which represents the display channel newly correlated with the channel selecting position from the table, then registering a searched word in the dictionary and accordingly updating the dictionary; a speech input step of inputting speech; a speech recognition step of recognizing the speech inputted based on the dictionary, and outputting a recognition result; and a channel selection control step of receiving a signal on the receive channel correlated with the same channel selecting position as the channel selecting position correlated with the display channel and then outputting the signal, when the recognition result is the unit of language which represents the display channel.

A channel selecting apparatus utilizing speech recognition according to another aspect of the present invention comprises: a table in which a receive channel is correlated with a unit of language which represents the receive channel; a channel setting information storing unit which stores a channel selecting position and the receive channel in mutual correlation with each other; a dictionary containing a registration of a unit of language representing the receive channel which is correlated with the channel selecting position; a dictionary generating unit which, when the channel setting information storing unit correlates the new receive channel with the channel selecting position, automatically searches for a unit of language which represents the receive channel newly correlated with the channel selecting position from the table, registers a searched word in the dictionary and accordingly updates the dictionary; a speech inputting unit of inputting speech; a speech recognition unit which recognizes the speech inputted based on the dictionary, and outputs a recognition result; and a channel selection controlling unit which receives the recognition result, and when the recognition result is the unit of language which represents the receive channel, receives a signal for the receive channel and outputs the signal.

A method of controlling a channel selecting apparatus utilizing speech recognition according to further another aspect of the present invention comprises: a table in which a receive channel is correlated with a unit of language which represents the receive channel; a channel setting information storing unit which stores a channel selecting position and the receive channel in mutual correlation with each other; and a dictionary containing a registration of a unit of language representing the receive channel which is correlated with the channel selecting position, the method being characterized in comprising: a dictionary generating step of automatically searching for, when the channel setting information storing unit correlates the new receive channel with the channel selecting position, a unit of language which represents the receive channel newly correlated with the channel selecting position from the table, then registering a searched word in the dictionary and accordingly updating the dictionary; a speech input step of inputting speech; a speech recognition step of recognizing the speech inputted based on the dictionary, and outputting a recognition result; and a channel selection control step of receiving a signal on the receive channel and then outputting the signal, when the recognition result is the unit of language which represents the receive channel.

A channel selecting apparatus utilizing speech recognition according to further another aspect of the present invention comprises: a table which correlates a broadcasting station identifier, a receive channel for a signal transmitted from a broadcasting station which is correlated with the broadcasting station identifier, and a unit of language which represents the broadcasting station identifier or a unit of language which represents the name, abbreviated name or common name of a broadcasting station which is correlated with the broadcasting station identifier with each other; a channel setting information storing unit which stores a channel selecting position and the broadcasting station identifier in mutual correlation with each other; a dictionary containing a registration of a unit of language representing the broadcasting station identifier which is correlated with the channel selecting position or a unit of language representing the name, abbreviated name or common name of a broadcasting station correlated with the broadcasting station identifier which is correlated with the channel selecting position; a dictionary generating unit which, when the channel setting information storing unit correlates a new broadcasting station identifier with the channel selecting position, automatically searches for, from the table, a unit of language which represents the broadcasting station identifier newly correlated with the channel selecting position or a unit of language representing the name, abbreviated name or common name of a broadcasting station correlated with the broadcasting station identifier newly correlated with the channel selecting position, then registers a searched word in the dictionary and accordingly updates the dictionary; a speech inputting unit of inputting speech; a speech recognition unit which recognizes the speech inputted based on the dictionary, and outputs a recognition result; and a channel selection controlling unit which receives the recognition result, and when the recognition result is the unit of language which represents the broadcasting station identifier or the unit of language representing the name, abbreviated name or common name of the broadcasting station correlated with the broadcasting station identifier, receives a signal for the receive channel correlated with the broadcasting station identifier and outputs the signal.

A method of controlling a channel selecting apparatus utilizing speech recognition according to further another aspect of the present invention comprises : a table which correlates a broadcasting station identifier, a receive channel for a signal transmitted from a broadcasting station which is correlated with the broadcasting station identifier, and a unit of language which represents the broadcasting station identifier or a unit of language which represents the name, abbreviated name or common name of a broadcasting station which is correlated with the broadcasting station identifier with each other; a channel setting information storing unit which stores a channel selecting position and the broadcasting station identifier in mutual correlation with each other; and a dictionary containing a registration of a unit of language representing the broadcasting station identifier which is correlated with the channel selecting position or a unit of language representing the name, abbreviated name or common name of a broadcasting station correlated with the broadcasting station identifier which is correlated with the channel selecting position, the method being characterized in comprising: a dictionary generating step of automatically searching for, when the channel setting information storing unit correlates a new broadcasting station identifier with the channel selecting position, from the table, a unit of language which represents the broadcasting station identifier newly correlated with the channel selecting position or a unit of language representing the name, abbreviated name or common name of a broadcasting station correlated with the broadcasting station identifier newly correlated with the channel selecting position, then registering a searched word in the dictionary and accordingly updating the dictionary; a speech input step of inputting speech; a speech recognition step of recognizing the speech inputted based on the dictionary, and outputting a recognition result; and a channel selection control step of receiving a signal on the receive channel correlated with the broadcasting station identifier and then outputting the signal, when the recognition result is the unit of language which represents the broadcasting station identifier or the unit of language representing the name, abbreviated name or common name of the broadcasting station correlated with the broadcasting station identifier.

In the case of a channel selecting apparatus including a predetermined number of channel selecting positions (e.g., a channel selecting apparatus of a television set), an operator can not select receive channels other than those which are correlated with the channel selecting positions. Even if the operator can select, it is extremely rare for the operator to make such a selection. A channel selecting apparatus utilizing speech recognition is characterized in that it only has to recognize such speech alone which is needed to select a channel. Registering units of language other than those needed to select channels in a dictionary increases the amount of calculation within a speech recognition apparatus and will backfire as slowing down of processing in the speech recognition apparatus. The selecting apparatus according to the present invention automatically generates a dictionary of a small size which accepts registrations of units of language expressing receive channels or the like stored in the channel setting information storing unit. Thus generated dictionary contains registrations of units of language which are necessary to recognize speech for determination of a receive channel pronounced by the operator, without useless content or omission of words. Such a compact and useless-content-free dictionary for speech recognition allows to use an inexpensive microcomputer for recognition of speech at a fast response speed. The present invention thus realizes a speech recognition-based channel selecting apparatus which is inexpensive and whose speech recognition speech is fast, and also a controlling method thereof.

It is preferable that at the time of registering a searched unit of language and updating the dictionary, the dictionary generating unit deletes a unit of language which expresses a receive channel or the like which has been up to then correlated with the corresponding channel selecting position. However, this unit of language may be left registered in the dictionary instead of deleting the unit of language.

Any desired units of language, such as words, phrases , clauses and sentences, may be registered in the dictionary.

Only units of language may be registered in the dictionary, or the channel selecting positions may be correlated with units of language in the dictionary. Alternatively, receive channels may be correlated with units of language in the dictionary, or further alternatively, broadcasting station identifiers may be correlated with units of language in the dictionary.

The table may be a dedicated display channel table formed by display channels and units of language which express the display channels for instance. Alternatively, a table may contain other units of language (e.g., a table which contains display channels, receive channels, the names of broadcasting stations, etc., and units of language which expressing those).

A channel selecting apparatus utilizing speech recognition according to a further another aspect of the present invention comprises : a table which correlates a receive channel with the name, abbreviated name or common name of a broadcasting station transmitting a signal for the receive channel; a channel setting information storing unit which stores a channel selecting position and the receive channel in mutual correlation with each other; a dictionary containing a registration of a unit of language which represents the name, abbreviated name or common name of the broadcasting station transmitting a signal for the receive channel correlated with the channel selecting position; a dictionary generating unit which, when the channel setting information storing unit correlates a new receive channel with the channel selecting position, automatically searches for, from the table, a unit of language representing the name, abbreviated name or common name of a broadcasting station transmitting a signal for the receive channel newly correlated with the channel selecting position, then registers a searched word in the dictionary and accordingly updates the dictionary; a speech inputting unit of inputting speech; a speech recognition unit which recognizes the speech inputted based on the dictionary, and outputs a recognition result; and a channel selection controlling unit which receives the recognition result, and when the recognition result is the unit of language which represents the name, abbreviated name or common name of the broadcasting station transmitting a signal for the receive channel, receives a signal for the receive channel and outputs the signal.

A method of controlling a channel selecting apparatus utilizing speech recognition according to further another aspect of the present invention comprises : a table which correlates a receive channel with the name, abbreviated name or common name of a broadcasting station transmitting a signal for the receive channel; a channel setting information storing unit which stores a channel selecting position and the receive channel in mutual correlation with each other; and a dictionary containing a registration of a unit of language which represents the name, abbreviated name or common name of the broadcasting station transmitting a signal for the receive channel correlated with the receive channel, the method being characterized in comprising: a dictionary generating step of automatically searching for, from the table, a unit of language representing the name, abbreviated name or common name of a broadcasting station transmitting a signal for the receive channel newly correlated with the channel selecting position, then registering a searched word in the dictionary and accordingly updating the dictionary, when the channel setting information storing unit correlates a new receive channel with the channel selecting position; a speech input step of inputting speech; a speech recognition step of recognizing the speech inputted based on the dictionary, and outputting a recognition result; and a channel selection control step of receiving a signal on the receive channel and then outputting the signal, when the recognition result is the unit of language which represents the name, abbreviated name or common name of the broadcasting station transmitting a signal for the receive channel.

In the case of a channel selecting apparatus including channel selecting positions (e.g., a channel selecting apparatus of a television set), an operator can not select broadcasting signals from broadcasting stations correlated with broadcasting station identifiers other than those broadcasting station identifiers which are correlated with the channel selecting positions. Even if the operator can select, it is extremely rare for the operator to make such a selection.

The dictionary according to the present invention contains registrations of units of language which are necessary to recognize speech for determination of a broadcasting station identifier pronounced by the operator, without useless content or omission of words. Such a compact and useless-content-free dictionary for speech recognition allows to use an inexpensive microcomputer for recognition of speech at a fast response speed. The present invention thus realizes a speech recognition-based. channel selecting apparatus which is inexpensive and whose speech recognition speech is fast, and also a controlling method thereof.

It is preferable that at the time of registering a searched unit of language and updating the dictionary, the dictionary generating unit deletes a unit of language or the like which expresses a broadcasting station identifier which has been up to then correlated with the corresponding channel selecting position. However, the unit of language may be left registered in the dictionary without deleting the unit of language.

The "broadcasting station identifiers" are unique information which is assigned to the respective broadcasting stations and may be expressed in any desired manner. For instance, the broadcasting station identifiers are broadcasting station identifying numbers formed by a plurality digits of alphanumeric characters.

In the above-mentioned channel selecting apparatus utilizing speech recognition according to further another aspect of the present invention, the table correlates, in mutual correlation with each other, the receive channel, geographical location information and the unit of language which represents the name, abbreviated name or common name of the broadcasting station transmitting a signal for the receive channel; the geographical location information is correlated with the channel selecting apparatus; and when the channel setting information storing unit correlates the new receive channel with the channel selecting position or when the geographical location information correlated with the channel selecting apparatus is updated, the dictionary generating unit automatically searches for, from the table, a unit of language representing the name, abbreviated name or common name of the broadcasting station transmitting a signal for the receive channel newly correlated with the channel selecting position and the geographical location information, then registers a searched word in the dictionary and accordingly updates the dictionary.

In the above-mentioned method of controlling a channel selecting apparatus utilizing speech recognition according to further another aspect of the present invention, the table correlates, in mutual correlation with each other, the receive channel, geographical location information and the unit of language which represents the name, abbreviated name or common name of the broadcasting station transmitting a signal for the receive channel; the geographical location information is correlated with the channel selecting apparatus; and when the channel setting information storing unit correlates the new receive channel with the channel selecting position or when the geographical location information correlated with the channel selecting apparatus is updated, at the dictionary generating step, search is made within the table for a unit of language representing the name, abbreviated name or common name of a broadcasting station transmitting a signal for the receive channel newly correlated with the channel selecting position and the geographical location information, a searched word is then registered in the dictionary and the dictionary is accordingly updated.

Depending on the geographic location of a channel selecting apparatus of a television set for instance, receive channels for broadcasting signals are correlated differently with broadcasting stations which transmit those signals in the channel selecting apparatus. For example, the receive channel for receiving broadcasting signals from NHK is Channel 2 in Osaka City but Channel 3 in Nagoya City.

According to the present invention, the channel selecting apparatus is correlated with geographical location information about the geographical location where the channel selecting apparatus is located (e.g., Osaka City) , and the names and the like of the broadcasting stations corresponding to the geographical location information are registered in the dictionary. This allows to automatically register the names and the like of appropriate broadcasting stations, regardless of where an operator lives. Any desired method may be used to correlate the channel selecting apparatus with the geographical location information. For instance, the channel selecting apparatus may be correlated with the geographical location information using GPS (Global Positioning System), etc. Alternatively, an operator may input and register the geographical location information in the channel selecting apparatus. Once a registration is made, a further registration is unnecessary unless the geographical location of the channel selecting apparatus is moved.

In the above-mentioned channel selecting apparatus utilizing speech recognition according to further another aspect of the present invention, the table which is unique to a service area of digital broadcasting is downloaded through said digital broadcasting.

In the above-mentioned method of controlling a channel selecting apparatus utilizing speech recognition according to another aspect of the present invention, the table which is unique to a service area of digital broadcasting is downloaded through said digital broadcasting.

With the table downloaded to the channel selecting apparatus (which is typically a channel selecting apparatus incorporated within a television set) through digital broadcasting, the channel selecting apparatus can automatically register the names and the like of appropriate broadcasting stations in accordance with broadcasting stations whose signal can be received by the channel selecting apparatus .

While the novel features of the present invention are those particularly pointed out in the attached CLAIMS, both the structure and the content of the present invention as well as other objects and features of the present invention will be well understood and evaluated from the following detained description when taken in conjunction with the correlated drawings.

### BRIEF DESCRIPTION OF THE DRAWINGS

Fig. 1 is a block diagram showing a structure of a channel selecting apparatus utilizing speech recognition according to a preferred embodiment of the present invention;
Fig. 2 is a flow chart showing a dictionary word setting operation in the channel selecting apparatus utilizing speech recognition according to the preferred embodiment of the present invention;
Fig. 3 is a schematic diagram showing a structure of the appearance of the channel selecting apparatus utilizing speech recognition according to the preferred embodiment of the present invention;
Fig. 4 is a drawing which shows one example of channel setting information in a channel setting information storing unit 51 according to the preferred embodiment of the present invention;
Fig. 5 is a drawing which shows one example of a display channel table 32 of the channel selecting apparatus utilizing speech recognition according to the preferred embodiment of the present invention;
Fig. 6 is a drawing which shows one example of a receive channel table 33 of the channel selecting apparatus utilizing speech recognition according to the preferred embodiment of the present invention;
Fig. 7 is a drawing which shows one example of a broadcasting station identifier table 34 of the channel selecting apparatus utilizing speech recognition according to the preferred embodiment of the present invention;
Fig. 8 is a drawing which shows one example of a word dictionary stored within a word dictionary storing unit 30 of the channel selecting apparatus utilizing speech recognition according to the preferred embodiment of the present invention;
Fig. 9 is a drawing for describing a specific operation in the channel selecting apparatus utilizing speech recognition according to the preferred embodiment of the present invention;
Fig. 10 is a drawing which shows one example of a broadcasting station name table 35 of the channel selecting apparatus utilizing speech recognition according to a preferred embodiment 2 of the present invention; and
Fig. 11 is a drawing which shows one example of a broadcasting station name table 36 of the channel selecting apparatus utilizing speech recognition according to a preferred embodiment 3 of the present invention.

All or some drawings merely illustrate the outline for an illustrative purpose, and therefore, it should be noted that the drawings may not necessarily illustrate actual relative sizes, locations, etc., of the illustrated elements.

### DETAILED DESCRIPTION OF THE PREFERRED EMBODIMENTS

Preferred embodiments specifically expressing the best mode for implementing the present invention will now be described with reference to the correlated drawings.

### «Preferred Embodiment 1»

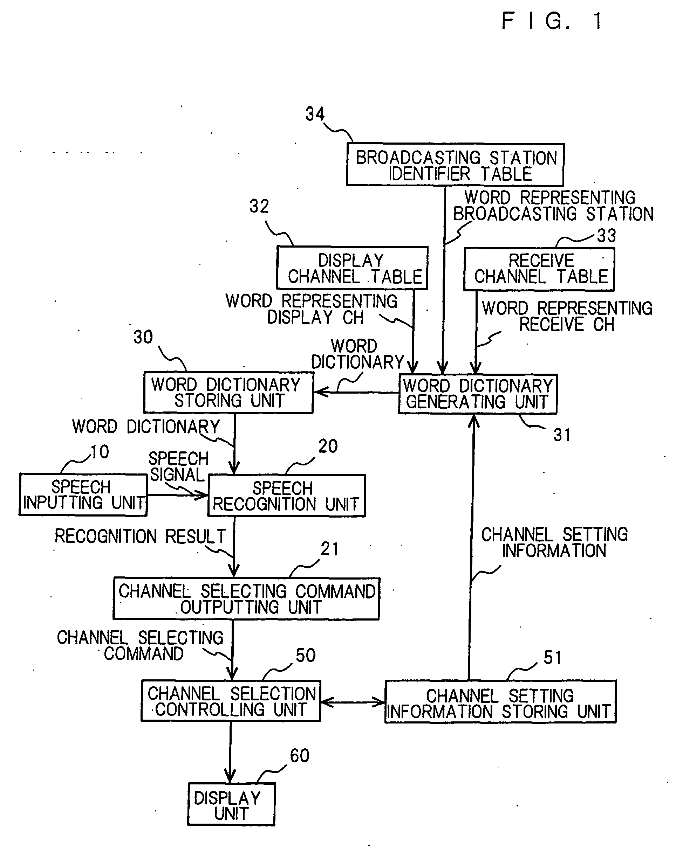

A channel selecting apparatus utilizing speech recognition according to a preferred embodiment 1 of the present invention will now be described with reference to Figs. 1 through 9. Fig. 1 is a block diagram showing a structure of the channel selecting apparatus utilizing speech recognition according to the preferred embodiment 1. The channel selecting apparatus according to the preferred embodiment 1 is incorporated within a television set, and selects a receive channel of the television set.

The channel selecting apparatus utilizing speech recognition shown in Fig. 1 comprises a speech inputting unit 10, a speech recognition unit 20, a channel selecting command outputting unit 21, a word dictionary storing unit 30 (dictionary storing unit), a word dictionary generating unit 31 (dictionary generating unit), the display channel table 32, the receive channel table 33, the broadcasting station identifier table 34, a channel selection controlling unit 50, the channel setting information storing unit 51, and a display unit 60. While the display channel table 32, the receive channel table 33 and the broadcasting station identifier table 34 are disposed separately according to this preferred embodiment, these tables may be one integrated table.

The channel selecting apparatus according to this preferred embodiment comprises a predetermined number of channel selecting positions (twelve positions in this preferred embodiment). The channel setting information storing unit 51 stores the respective channel selecting positions, display channels, receive channels and broadcasting station identifiers in mutual correlation with each other. Based on an instruction which an operator supplies while looking at a guidance screen displayed on the display unit 60 (display), the channel selection controlling unit 50 correlates any desired display channel, any desired receive channel and any desired broadcasting station identifier with each channel selecting position and stores them in the channel setting information storing unit 51.

As the display channel, the receive channel or the broadcasting station identifier correlated with any one of channel selecting positions are changed, the channel setting information storing unit 51 outputs to the word dictionary generating unit 31 new correlation information regarding correlations between the channel selecting positions, the display channels, the receive channels and the broadcasting station identifiers (hereinafter referred to as "channel setting information"). In this preferred embodiment, the channel setting information is new correlation information expressing correlations between changed channel selecting positions, changed display channels, changed receive channels and changed broadcasting station identifiers.

Unlike in this preferred embodiment, the channel setting information may be information expressing correlations between changed channel selecting positions and changed items (which may be receive channels for example), or alternatively, may be information of only changed items. Further alternatively, the channel setting information may be all information about correlations between the respective channel selecting positions, corresponding display channels, corresponding receive channels and corresponding broadcasting station identifiers.

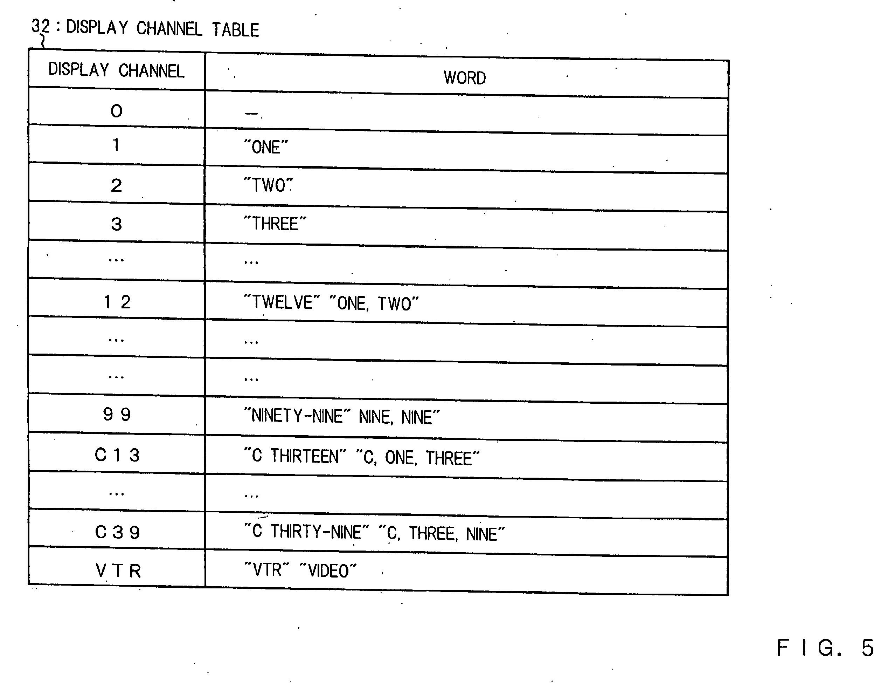

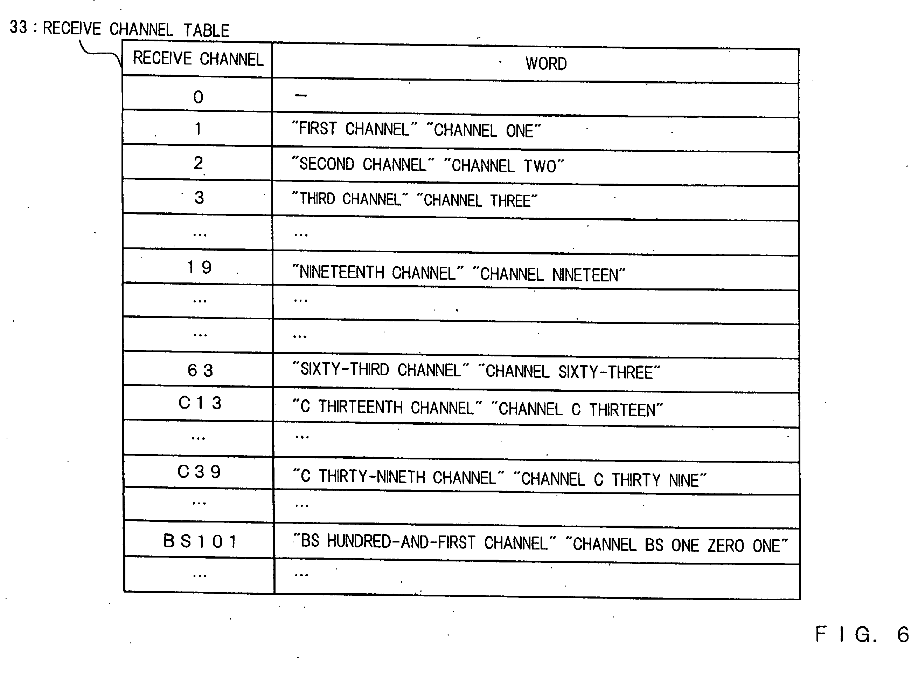

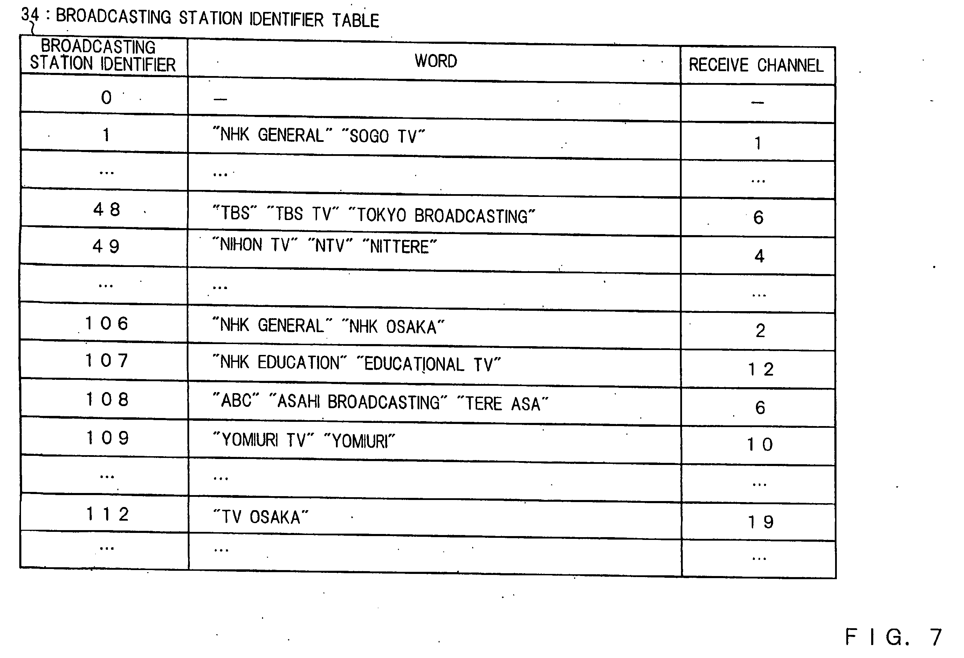

The display channel table 32 is a table (as that shown in Fig. 5 for example) in which the respective channel selecting positions are correlated with units of language which express the channel selecting positions (These are called "display channels." For instance, when the third channel selecting position is selected, typically, "3CH" which is the number of this channel selecting position, or the channel number (e.g., "19CH") given to a receive channel which is correlated with the third channel selecting position, is displayed on a display screen. "3CH" or "19CH" is the display channel.) The receive channel table 33 is a table (as that shown in Fig. 6 for example) in which the respective receive channels in a tuner are correlated with units of language which express the channel numbers of the receive channels. The broadcasting station identifier table 34 is a table (as that shown in Fig. 7 for example) in which the broadcasting station identifiers of the respective broadcasting stations are correlated with receive channels for signals transmitted from the broadcasting stations correlated with the broadcasting station identifiers and units of language which express the names, abbreviated names and common names of the broadcasting stations (which may be units of language which express the broadcasting station identifiers) In the broadcasting station identifier table 34, the broadcasting stations may correlated further with units of language which express the broadcasting station identifiers.

In this preferred embodiment, the units of language registered in the respective tables and the dictionary are words However, this is not limiting. Words, phrases, clauses and sentences and the like may be registered in the respective tables and the dictionary.

The word dictionary generating unit 31, using the channel setting information from the channel setting information storing unit 51, automatically searches for a unit of language representing a channel selecting position (display channel) which is newly correlated with the channel selecting position from the display channel table 32, correlates the searched unit of language with the channel selecting position, registers the searched unit of language in the word dictionary storing unit 30 and accordingly updates the word dictionary storing unit 30.

Using the channel setting information from the channel setting information storing unit 51, the word dictionary generating unit 31 automatically searches for a unit of language representing a receive channel (a receive channel number in this preferred embodiment) which is newly correlated with the channel selecting position from the receive channel table 33, correlates the searched unit of language with the channel selecting position, registers the searched unit of language in the word dictionary storing unit 30 and accordingly updates the word dictionary storing unit 30.

Using the channel setting information from the channel setting information storing unit 51, the word dictionary generating unit 31 automatically searches for a unit of language representing the name, abbreviated name or common name of a broadcasting station correlated with the broadcasting station identifier which is newly correlated with the channel selecting position (which may be a unit of language representing the broadcasting station identifier which is newly correlated with the channel selecting position) from the broadcasting station identifier table 34, correlates the searched unit of language with the channel selecting position, registers the searched unit of language in the word dictionary storing unit 30 and accordingly updates the word dictionary storing unit 30. In the following, "the names and the like of broadcasting stations correlated with broadcasting station identifiers" will be used as an abbreviation referring to "units of language representing the names, abbreviated names and common names of broadcasting stations correlated with broadcasting station identifiers and/or units of language representing broadcasting station identifiers which are newly correlated with the channel selecting positions."

From the broadcasting station identifier table 34, the channel setting information storing unit 51 reads the receive channel correlated with the broadcasting station identifier newly correlated with the channel selecting position, and stores the same.

In this preferred embodiment, registered in the word dictionary storing unit 30 are units of language representing the channel selecting positions, units of language representing the receive channels, and the names and the like of broadcasting stations correlated with broadcasting station identifiers which are correlated with selecting positions respectively. In the dictionary, these units of language may be correlated with the receive channels or the like, instead of with the selected positions.

The speech inputting unit 10 is a microphone for instance. The speech inputting unit 10 converts speech uttered by an operator into a speech signal, and outputs the speech signal to the speech recognition unit 20.

The speech recognition unit 20, using the speech signal outputted from the speech inputting unit 10, calculates the likelihood which denotes a similarity level with a word already registered in the word dictionary storing unit 30, and outputs the result of recognition to the channel selecting command outputting unit 21. The recognition result is typically one of a unit of language which represents the channel selecting position, a unit of language which represents the receive channel, and the name or the like of the broadcasting station correlated with the broadcasting station identifier.

The channel selecting apparatus does not need to recognize units of language which represent receive channels and the like which are not correlated with the channel selecting position. The word dictionary storing unit 30 therefore contains registrations of only those units of language which represent receive channels and the like which are correlated with the channel selecting positions.

In accordance with the recognition result outputted from the speech recognition unit 20, the channel selecting command outputting unit 21 outputs, to the channel selection controlling unit 50, a channel selecting command which contains at least one of the channel selecting position, the receive channel and the broadcasting station identifier. In this preferred embodiment, the channel selecting command outputting unit 21 outputs a channel selecting command which designates the channel selecting position which is correlated with the recognition result.

Instead of this, the channel selecting command outputting unit 21 may search within the word dictionary storing unit 30, the display channel table 32, the receive channel table 33 and/or the broadcasting station identifier table 34, find the receive channel or broadcasting station identifier which corresponds to the recognition result, and output a channel selecting command which designates the receive channel or broadcasting station identifier.

The channel selection controlling unit 50 receives the channel selecting command and the channel setting information which is stored in the channel setting information storing unit 51, and determines a receive channel. The channel selection controlling unit 50 comprises a tuner of a television set, a decoding unit and the like (not shown), and receives and outputs a signal on the receive channel.

Based on the channel setting information, the channel selection controlling unit 50 extracts a receive channel which is correlated with the channel selecting position which is designated by the channel selecting command, and receives a signal on the receive channel.

In other preferred embodiment, when there is a receive channel designated by the channel selecting command, the channel selection controlling unit 50 receives a signal on that receive channel. In the event that a broadcasting station identifier is designated by the channel selecting command, the channel selection controlling unit 50 receives a signal on the receive channel which is correlated with that broadcasting station identifier.

The display unit 60 is formed by an image displaying apparatus using liquid crystals, a CRT or the like, and a speaker. The image displaying apparatus displays the video signal outputted from the channel selection controlling unit 50, while the speaker outputs speech.

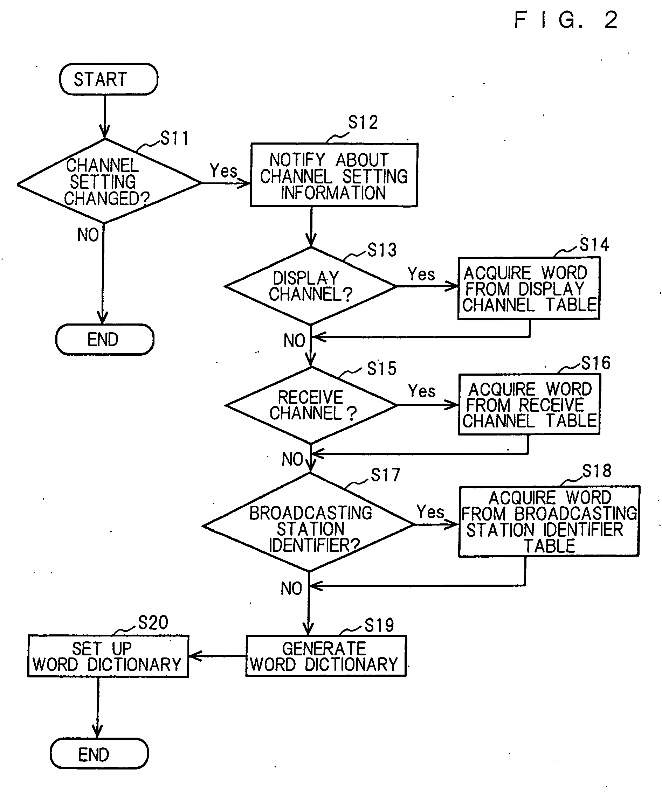

An operation in the speech recognition-based channel selecting apparatus having the above-mentioned structure will now be described. Fig. 2 is a flow chart showing a dictionary word setting operation in the channel selecting apparatus utilizing speech recognition which is shown in Fig. 1.

First, at a step S11, whether there is a change in the channel setting information is checked (S11). If there is no change (NO at S11), the sequence is terminated. When the channel selection controlling unit 50 changes the channel setting information in accordance with an instruction inputted by an operator (YES at S11), the changed channel setting information is stored in the channel setting information storing unit 51. The channel setting information storing unit 51, as the channel setting information is changed (YES at S11), outputs to the word dictionary generating unit 31 the channel setting information now containing the (changed) display channel, the (changed) receive channel or the (changed) broadcasting station identifier newly correlated with the channel selecting position (S12).

The word dictionary generating unit 31 determines whether thus inputted channel setting information contains information regarding the display channel newly correlated with the channel selecting position (S13). But for updating of the information regarding the display channel (NO at S13), the sequence proceeds to a step S15. With updating of the display channel information found (YES at S13), the word dictionary generating unit 31 searches within the display channel table 32 and acquires a unit of language which represents the display channel (S14). The sequence then proceeds to the step S15.

The word dictionary generating unit 31 determines whether thus inputted channel setting information contains the information regarding the receive channel newly correlated with the channel selecting position (S15). But for updating of the information regarding the receive channel (NO at S15), the sequence proceeds to a step S17. With updating of the receive channel information found (YES at S15), the word dictionary generating unit 31 searches within the receive channel table 33 and acquires a unit of language which represents the receive channel (S16). The sequence then proceeds to the step S17.

The word dictionary generating unit 31 determines whether thus inputted channel setting information contains the information regarding the broadcasting station identifier newly correlated with the channel selecting position (S17). But for updating of the information regarding the broadcasting station identifier (NO at S17), the sequence proceeds to a step S19. In the event that the information regarding the broadcasting station identifier has been updated (YES at S17), the word dictionary generating unit 31 searches within the broadcasting station identifier table 34 and acquires the name or the like of the broadcasting station correlated with the updated broadcasting station identifier (S18). The channel setting information storing unit 51 reads the receive channel correlated with the broadcasting station identifier from the broadcasting station identifier table 34 and stores the same. The sequence then proceeds to the step S19.

The word dictionary generating unit 31 generates a new word dictionary (S19) from the unit of language acquired from the display channel table (S14), the unit of language acquired from the receive channel table (S16) and/or the unit of language acquired from the broadcasting station identifier table (S18), registers thus generated word dictionary in the word dictionary storing unit 30 and accordingly updates the word dictionary storing unit 30 (S20).

As speech uttered by the operator is fed to the speech inputting unit 10, the speech recognition unit 20 calculates the likelihood which denotes a similarity level between the operator's speech and the unit of language which represents the channel selecting position (display channel), the unit of language which represents the receive channel or the name and the like of the broadcasting station correlated with the broadcasting station identifier which are correlated with the channel selecting positions stored in the word dictionary storing unit 30. (In this preferred embodiment, words are used as the unit for calculation of the likelihood.) The speech recognition unit 20 extracts a unit of language (which is a word in this preferred embodiment) whose similarity level is at or beyond a certain similarity level and is the highest, and recognizes the input speech as thus extracted unit of language. The speech recognition unit 20 then outputs the result of recognition to the channel selecting command outputting unit 21. The channel selecting command outputting unit 21 outputs a channel selecting command corresponding to the recognition result to the channel selection controlling unit 50. The channel selection controlling unit 50 receives a signal on the receive channel in accordance with the channel selecting command, and outputs the signal.

The image displaying apparatus of the display unit 60 displays the video signal outputted from the channel selection controlling unit 50, while the speaker outputs speech.

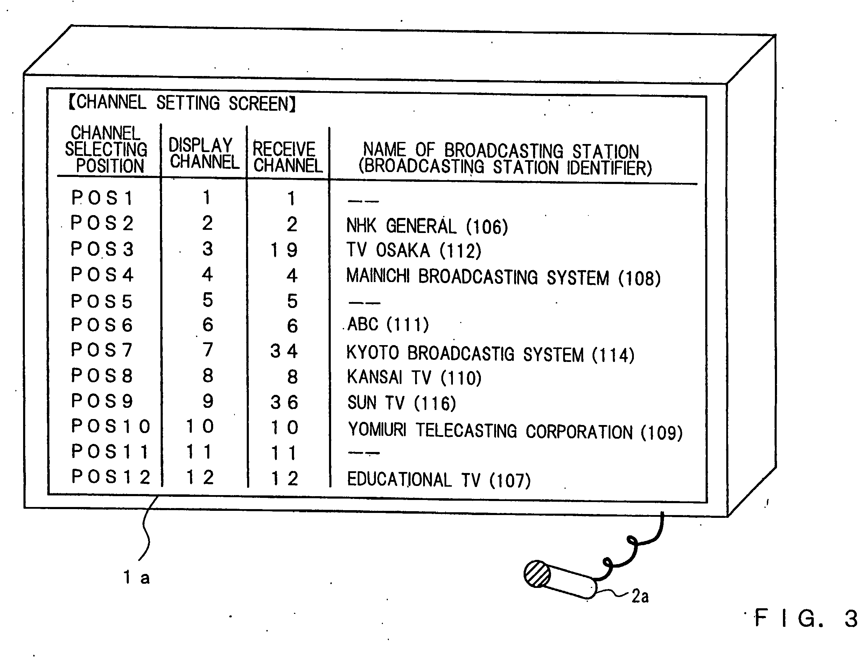

An operation in the speech recognition-based channel selecting apparatus shown in Fig. 1 will now be described in more details, in relation to a further specific example. Fig. 3 is a schematic appearance diagram of the channel selecting apparatus utilizing speech recognition according to the preferred embodiment 1. Within the display screen in Fig. 3 in the channel setting information storing unit 51.

The speech recognition-based channel selecting apparatus shown in Fig. 3 comprises a microphone 2a which serves as a speech inputting unit and a display screen 1a of the image displaying apparatus.

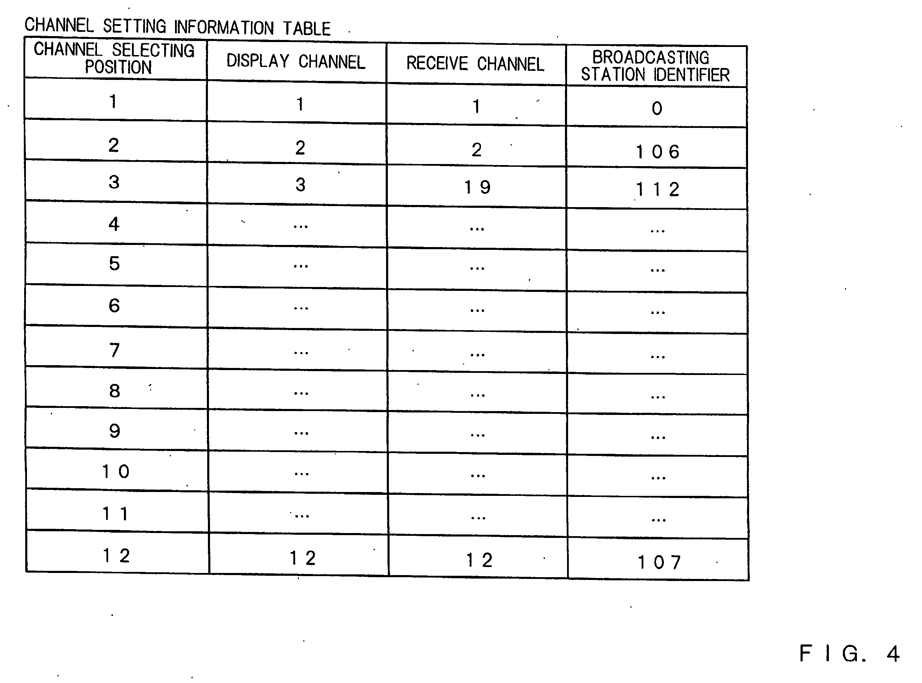

As the changed channel setting information gets updated and accordingly becomes as shown in the display screen 1a of Fig. 3 for instance, the channel setting information storing unit 51 sends the channel setting information as that shown in Fig. 4 to the word dictionary generating unit 31 (in the event that the settings of all channel selecting positions are changed).

Fig. 5 shows one example of the display channel table 32. Assume now that the display channel "3" is newly correlated with the channel selecting position "3" in the channel setting information in Fig. 4. The word dictionary generating unit 31 reads the word "three" correlated with "3" from the display channel table 32 which is shown in Fig. 5, and registers this word in the word dictionary storing unit 30.

Fig. 6 shows one example of the receive channel table 33. Assume now that the receive channel "19" is newly correlated with the channel selecting position "3" in the channel setting information in Fig. 4. The word dictionary generating unit 31 reads the word "nineteenth channel" and the word "channel nineteen" correlated with "19" from the receive channel table 33 which is shown in Fig. 6, and registers these words in the word dictionary storing unit 30.

Fig. 7 shows one example of the broadcasting station identifier table 34. Assume now that the broadcasting station identifier "112" is newly correlated with the channel selecting position "3" in the channel setting information in Fig. 4. The word dictionary generating unit 31 reads the word "TV Osaka" correlated with the broadcasting station identifier "112" from the broadcasting station identifier table 34 which is shown in Fig. 7, registers this word in the word dictionary storing unit 30.

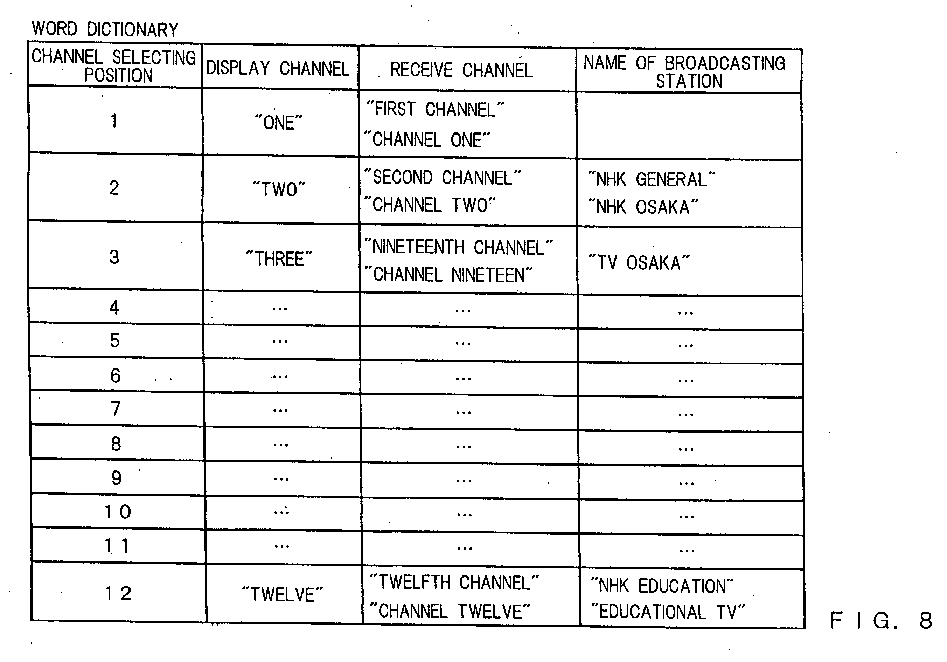

Thus, as words corresponding to the channel selecting position "3," these four words, namely, "three," "nineteenth channel," "channel nineteen" and "TV Osaka" are registered in the word dictionary in the word dictionary storing unit 30. Fig. 8 shows one example of the word dictionary.

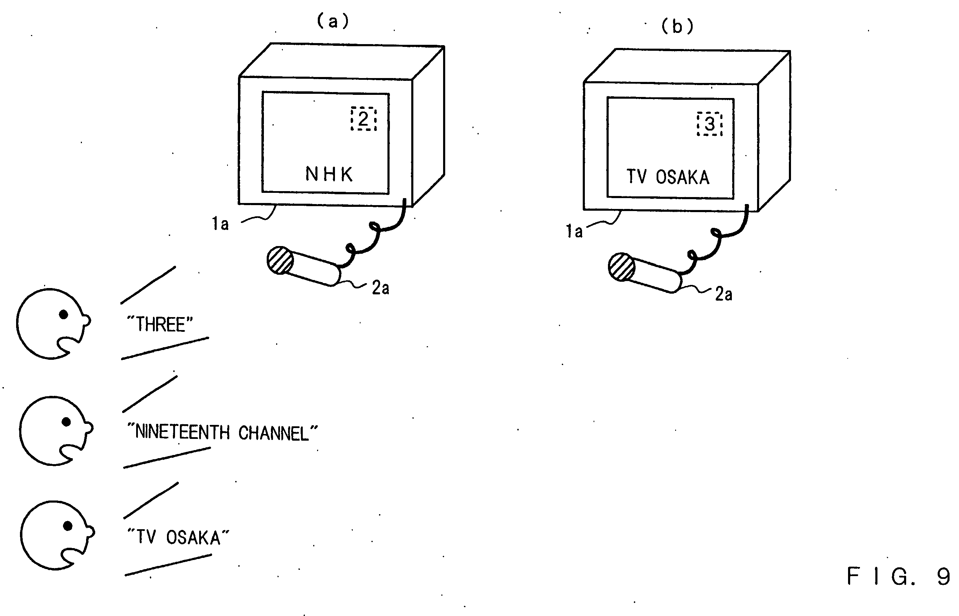

Fig. 9 shows on example of an operator as he or she manipulates the channel selecting apparatus according to the preferred embodiment 1. Assume that the word dictionary shown in Fig. 8 is stored in the word dictionary storing unit 30. The channel selecting apparatus is currently on Channel 2 (NHK) and shows corresponding pictures (Fig. 9(a)). As the operator says "three," the operator's voice pronouncing "three" is inputted to the microphone 2a. Since there is the word "three" registered in the word dictionary as a word corresponding to the channel selecting position "3," the speech recognition unit 20 outputs the word "three" recognized as the channel selecting position "3" and this word' s likelihood to the channel selecting command outputting unit 21 as the result of recognition.

The channel selecting command outputting unit 21 outputs to the channel selection controlling unit 50 a channel selecting command which causes the channel selecting position of the channel selecting apparatus to change to "3." The channel selection controlling unit 50 changes the channel selecting position of the channel selecting apparatus to "3" and the display unit 60 displays pictures corresponding to the channel selecting position "3" (Fig. 9(b)).

In a similar manner, when the operator says "nineteenth channel" or "TV Osaka," the channel selecting position "3" is selected and the display unit 60 displays pictures corresponding to the channel selecting position "3" (Fig. 9(b)).

As described above, the operator, without taking all the troubles of registering words, as he or she merely pronounces the display channel, the receive channel or the name of the broadcasting station which is in service in the area he or she lives, he or she can easily choose a channel. Since this speech recognition uses a small dictionary limited to units of language representing display channels and the like correlated with the channel selecting positions, the recognition speed is fast during the speech recognition, and therefore, a microcomputer for executing this processing may be of a low-consumption power type and a small size.

### «Preferred Embodiment 2»

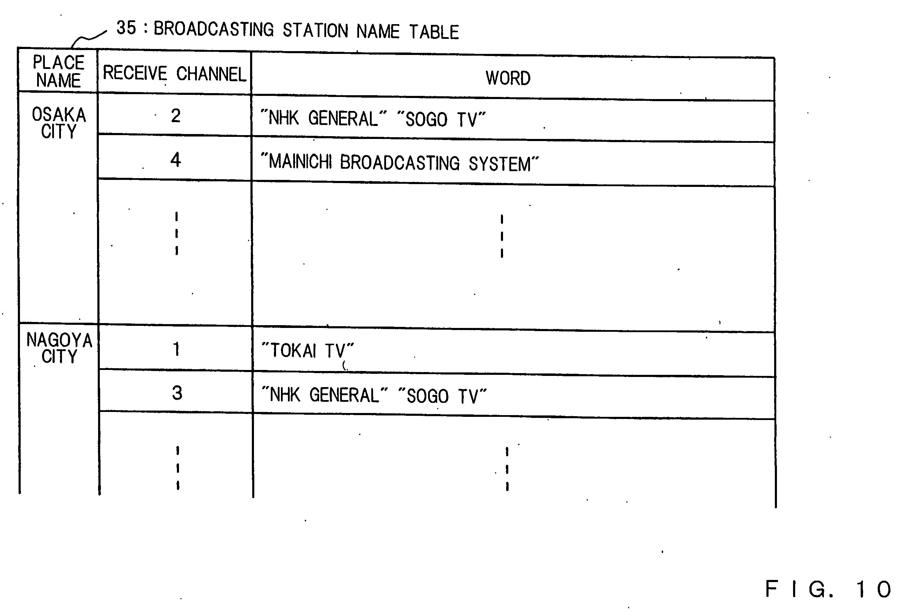

A channel selecting apparatus utilizing speech recognition according to a preferred embodiment 2 of the present invention will now be described with reference to Figs. 1 and 10. In addition to the respective tables 32 through 34 of the channel selecting apparatus according to the preferred embodiment 1 (Fig. 1), the speech recognition-based channel selecting apparatus according to the preferred embodiment 2 comprises a broadcasting station name table 35 (Fig. 10). Except of this, the channel selecting apparatus according to the preferred embodiment 2 is the same in structure as the channel selecting apparatus according to the preferred embodiment 1 (Fig. 1). The channel selecting apparatus according to the preferred embodiment 2 is incorporated within a television set and selects a receive channel for the television set.

The channel selecting apparatus according to the preferred embodiment 2 stores geographical location information (e.g., Osaka City) regarding where the channel selecting apparatus is located. Any desired method may be used as a method of storing the geographical location information in the channel selecting apparatus. For instance, the geographical location information may be automatically stored in the channel selecting apparatus, using GPS (Global Positioning System), etc. Alternatively, an operator may input and register the geographical location information in the channel selecting apparatus. Once a registration is made, a further registration is unnecessary unless the geographical location of the channel selecting apparatus is moved.

Fig. 10 shows one example of the broadcasting station name table 35 according to the preferred embodiment 2. The broadcasting station name table used in the preferred embodiment 2 is a table which correlates place names (geographical location information), receive channels, and units of language which represent the names, abbreviated names or common names of broadcasting stations transmitting signals for these receive channels.

Upon receipt of information regarding a receive channel newly correlated with a channel selecting position (channel setting information) from the channel setting information storing unit 51, the word dictionary generating unit 31 according to the preferred embodiment 2 searches for a unit of language representing the receive channel within the receive channel table 33, registers the identified unit of word in the word dictionary storing unit 30 and accordingly updates the word dictionary storing unit 30. At the same time, the word dictionary generating unit 31 searches for a unit of language representing the name, abbreviated name or common name of the broadcasting station correlated with the geographical location information (the geographical location information stored in the channel selecting apparatus) and the receive channel (the receive channel contained in the channel setting information) within the broadcasting station name table 35 (Fig. 10), registers the identified unit of word in the word dictionary storing unit 30 and accordingly updates the word dictionary storing unit 30. In the event that the channel selecting apparatus is located in Osaka City for example, as the receive channel is changed to 4 in the channel setting information, the word dictionary generating unit 31 registers "fourth channel" and "channel four" which are the words representing the receive channel (and which are contained in the receive channel table 33) and "Mainichi Broadcasting System" which is the word representing the name, abbreviated name or common name of the broadcasting station transmitting a 4CH-signal in Osaka City (and which is contained in the broadcasting station name table 35) in the word dictionary storing unit 30 and accordingly updates the word dictionary storing unit 30. As the operator pronounces one of these registered words, the channel selecting apparatus gets tuned to the receive channel 4 which is correlated with the pronounced word and shows corresponding pictures.

For the purpose of setting up channels, an operator normally correlates receive channels with channel selecting positions. The operator often refers to a receive channel, by a unit of language representing that receive channel or the name and the like of the broadcasting station which transmits a signal for that receive channel. When using the channel selecting apparatus according to the preferred embodiment 2, the operator can select a desired receive channel regardless of whether the operator pronounces the unit of language representing the receive channel or either the name and the like of the broadcasting station which transmits a signal for the receive channel. Once the operator registers geographical location information in the channel selecting apparatus, the names and the like of broadcasting stations matching the geographical location regarding the channel selecting apparatus are automatically registered in the dictionary. The word dictionary according to the preferred embodiment 2, which stores units of language representing receive channels correlated with channel selecting positions and the names and the like of the broadcasting stations which transmit signals for the receive channels, has a small size and does not contain a useless content. The channel selecting apparatus according to the preferred embodiment 2 realizes fast and inexpensive speech recognition.

### <<Preferred Embodiment 3>>

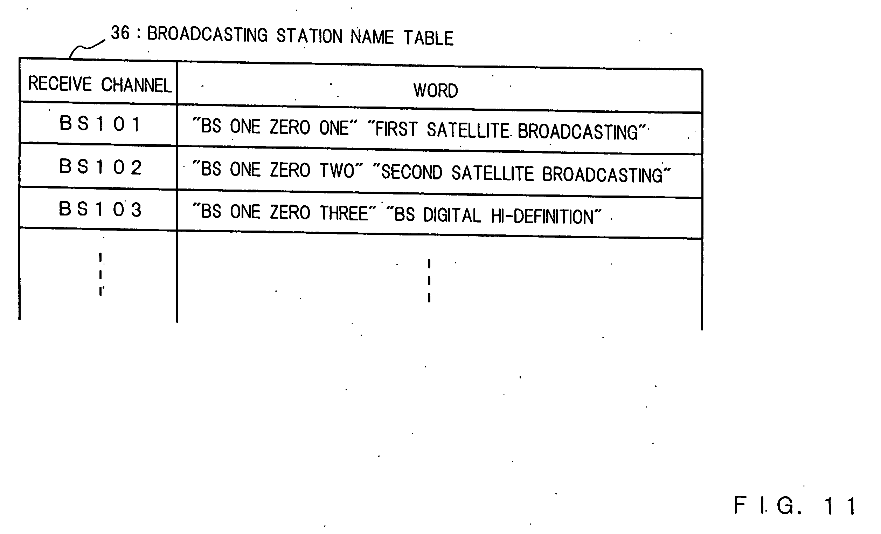

A channel selecting apparatus utilizing speech recognition according to a preferred embodiment 3 of the present invention will now be described with reference to Figs. 1 and 11. In addition to the respective tables 32 through 34 of the channel selecting apparatus according to the preferred embodiment 1 (Fig. 1), the speech recognition-based channel selecting apparatus according to the preferred embodiment 3 comprises a broadcasting station name table 36 (Fig. 11). Except of this, the channel selecting apparatus according to the preferred embodiment 3 is the same in structure as the channel selecting apparatus according to the preferred embodiment 1 (Fig. 1). The channel selecting apparatus according to the preferred embodiment 3 is incorporated within a television set and selects a receive channel for the television set.

Unlike in the preferred embodiment 2, geographical location information is not stored in the channel selecting apparatus according to the preferred embodiment 3. The channel selecting apparatus according to the preferred embodiment 3 downloads the broadcasting station name table 36 (Fig. 11) through digital broadcasting.

By means of downloading of the software through digital broadcasting, the channel selecting apparatus may acquire not only the broadcasting station name table 36 (Fig. 11) but all tables including the receive channel table 33 and the broadcasting station identifier table 34.

Fig. 11 is a drawing which shows one example of the broadcasting station name table 36 (a broadcasting station name table which is transmitted through digital broadcasting whose service area includes Osaka City) according to the preferred embodiment 3. The broadcasting station name table according to the preferred embodiment 3 is a table which correlates receive channels with the names, abbreviated names or common names of broadcasting stations transmitting signals for those receive channels. Place names (geographical location information) are not contained. Broadcasting stations transmit the broadcasting station name table 36 which correlates receive channels for areas which can be served through digital broadcasting with the names or the likes of broadcasting stations transmitting signals for those receive channels. The names and the likes of such broadcasting stations whose service areas do not overlap with the digital broadcasting are not contained in this broadcasting station name table.

Upon receipt of information regarding a receive channel newly correlated with a channel selecting position (channel setting information) from the channel setting information storing unit 51, the word dictionary generating unit 31 according to the preferred embodiment 3 searches for a unit of language representing the receive channel within the receive channel table 33, registers the identified unit of word in the word dictionary storing unit 30 and accordingly updates the word dictionary storing unit 30. At the same time, the word dictionary generating unit 31 searches for a unit of language representing the name, abbreviated name or common name of a broadcasting station correlated with the receive channel (the receive channel contained in the channel setting information) within the broadcasting station name table 36 (Fig. 11), registers the identified unit of word in the word dictionary and accordingly updates the word dictionary. When the receive channel is changed to BS101 in the channel setting information for instance, the word dictionary generating unit 31 registers in the word dictionary storing unit 30 a unit of language "BS one zero one channel" which represents the receive channel (and which is contained in the receive channel table 33), a unit of language "satellite broadcasting one" which represents the name, abbreviated name or common name of the broadcasting station which transmits a signal on Channel BS101 (and which is contained in the broadcasting station name table 36) and a unit of language "1101" which represents broadcasting station identifier of the broadcasting station which transmits a BS 101CH-signal (and which is contained in the broadcasting station identifier table 34), and accordingly updates the word dictionary storing unit 30. As an operator pronounces one of these registered words, the channel selecting apparatus receives the receive channel BS101 which is correlated with that word and displays corresponding pictures.

When an operator says "NHK" and designates a receive channel for example, a channel desired by the operator is different depending on where the operator lives. The channel selecting apparatus provided with the input speech pronouncing "NHK" should receive 1CH if the channel selecting apparatus is in Tokyo but 2CH if the channel selecting apparatus is in Osaka. Through terrestrial digital broadcasting, the speech recognition-based channel selecting apparatus downloads the broadcasting station name table 36 which contains receive channels and the like which are for the service area of the terrestrial digital broadcasting. For example, the channel selecting apparatus, if it is in Osaka, downloads the broadcasting station name table 36 which correlates the unit of language "NHK" with the receive channel for a signal transmitted from NHK OSAKA, through terrestrial digital broadcasting for which Osaka is a service area. Based on the downloaded table, the speech recognition-based channel selecting apparatus searches for a receive channel which is determined by the name and the like of the broadcasting station pronounced by the operator (a receive channel for that service area), receives a signal on that receive channel and displays corresponding pictures. As the operator pronounces a unit of language which represents the abbreviation "NHK," the channel selecting apparatus located in Osaka receives a signal transmitted from NHK OSAKA and displays corresponding pictures.

With the channel selecting apparatus and the channel selecting method according to the preferred embodiment 3 as well, it is possible to achieve a similar effect to that promised by the channel selecting apparatus and the like according to the preferred embodiment 2. Further, the channel selecting apparatus and the channel selecting method according to the preferred embodiment 3 eliminate the necessity of storing geographical location information in the channel selecting apparatus. The channel selecting apparatus contains a compact table which is suited to an area where the channel selecting apparatus is located.

An advantageous effect of the present invention is that the present invention provides a speech recognition-based channel selecting apparatus which does not demand cumbersome registration of words, which automatically generates a requisite and sufficient dictionary of a small size suited to user's resident location, which is inexpensive and whose speech recognition speech is fast, that the present invention also provides a controlling method thereof. An operator, pronouncing a receive channel or the like which matches with an area where he or she lives, can easily choose a channel.

The present invention realizes a speech recognition-based channel selecting apparatus which automatically generates a compact table which is suited to a local area where a user (viewer, operator) lives, and also a controlling method thereof.

The present invention realizes a speech recognition-based channel selecting apparatus which automatically generates a table in which abbreviated names and the like expressing a plurality of broadcasting stations are correlated with the receive channel for one broadcasting station whose service area is a local area where a user lives among those plurality of broadcasting stations, and the present invention also realizes a controlling method thereof.

While the foregoing has described the present invention in relation to preferred embodiments in certain details, the detailed structures according to the preferred embodiments described above may be modified. Combinations and an order of the respective elements may be modified without deviating from the scope of claims of the invention.

## Claims

1. A channel selecting apparatus utilizing speech recognition, comprising:
a table (32) in which a display channel is correlated with a unit of language which represents said display channel;
a channel setting information storing unit (51) which stores a channel selecting position, a receive channel and a display channel in mutual correlation with each other;
a dictionary (30) containing a registration of a unit of language representing said display channel which is correlated with said channel selecting position;
a dictionary generating unit (31) which, when said channel setting information storing unit correlates new said display channel with said channel selecting position, automatically searches for a unit of language which represents said display channel newly correlated with said channel selecting position from said table, then registers a searched word in said dictionary and accordingly updates said dictionary:
a speech inputting unit (10) of inputting speech;
a speech recognition unit (20) which recognizes said speech inputted based on said dictionary, and outputs a recognition result; and
a channel selection controlling unit (50) which receives said recognition result, and when said recognition result is the unit of language which represents said display channel, receives a signal for said receive channel correlated with the same channel selecting position as said channel selecting position correlated with said display channel, and outputs said signal.

2. A channel selecting apparatus utilizing speech recognition, comprising:
a table (33) in which a receive channel is correlated with a unit of language which represents said receive channel;
a channel setting information storing unit (51) which- stores a channel selecting position and said receive channel in mutual correlation with each other;
a dictionary (30) containing a registration of a unit of language representing said receive channel which is correlated with said channel selecting position;
a dictionary generating unit (31) which, when said channel setting information storing unit correlates new said receive channel with said channel selecting position, automatically searches for a unit of language which represents said receive channel newly correlated with said channel selecting position from said table, registers a searched word in said dictionary and accordingly updates said dictionary;
a speech inputting unit (10) of inputting speech;
a speech recognition unit (20) which recognizes said speech inputted based on said dictionary, and outputs a recognition result; and
a channel selection controlling unit (50) which receives said recognition result, and when said recognition result is the unit of language which represents said receive channel, receives a signal for said receive channel and outputs said signal.

3. A channel selecting apparatus utilizing speech recognition, comprising:
a table (34) which correlates a broadcasting station identifier, a receive channel for a signal transmitted from a broadcasting station which is correlated with said broadcasting station identifier, and a unit of language which represents said broadcasting station identifier or a unit of language which represents the name, abbreviated name or common name of a broadcasting station which is correlated with said broadcasting station identifier with each other;
a channel setting information storing unit (51) which stores a channel selecting position and said broadcasting station identifier in mutual correlation with each other;
a dictionary (30) containing a registration of a unit of language representing said broadcasting station identifier which is correlated with said channel selecting position or a unit of language representing the name, abbreviated name or common name of a broadcasting station correlated with said broadcasting station identifier which is correlated with said channel selecting position;
a dictionary generating unit (31) which, when said channel setting information storing unit correlates new said broadcasting station identifier with said channel selecting position, automatically searches for, from said table, a unit of language which represents said broadcasting station identifier newly correlated with said channel selecting position or a unit of language representing the name, abbreviated name or common name of a broadcasting station correlated with said broadcasting station identifier newly correlated with said channel selecting position, then registers a searched word in said dictionary and accordingly updates said dictionary;
a speech inputting unit (10) of inputting speech;
a speech recognition unit (20) which recognizes said speech inputted based on said dictionary, and outputs a recognition result; and
a channel selection controlling unit (50) which receives said recognition result, and when said recognition result is the unit of language which represents said broadcasting station identifier or the unit of language representing the name, abbreviated name or common name of said broadcasting station correlated with said broadcasting station identifier, receives a signal for said receive channel correlated with said broadcasting station identifier and outputs said signal.

4. A channel selecting apparatus utilizing speech recognition, comprising:
a table (32) which correlates a receive channel with the name, abbreviated name or common name of a broadcasting station transmitting a signal for said receive channel;
a channel setting information storing unit (51) which stores a channel selecting position and said receive channel in mutual correlation with each other;
a dictionary (30) containing a registration of a unit of language which represents the name, abbreviated name or common name of said broadcasting station transmitting a signal for said receive channel correlated with said channel selecting position;
a dictionary generating unit (31) which, when said channel setting information storing unit correlates new said receive channel with said channel selecting position, automatically searches for, from said table, a unit of language representing the name, abbreviated name or common name of a broadcasting station transmitting a signal for said receive channel newly correlated with said channel selecting position, then registers a searched word in said dictionary and accordingly updates said dictionary;
a speech inputting unit (10) of inputting speech;
a speech recognition unit (20) which recognizes said speech inputted based on said dictionary, and outputs a recognition result; and
a channel selection controlling unit (50) which receives said recognition result, and when said recognition result is the unit of language which represents the name, abbreviated name or common name of said broadcasting station transmitting a signal for said receive channel, receives a signal for said receive channel and outputs said signal.

5. The channel selecting apparatus utilizing speech recognition according to Claim 4, **characterized in that**
said table correlates, in mutual correlation with each other, said receive channel, geographical location information and the unit of language which represents the name, abbreviated name or common name of said broadcasting station transmitting a signal for said receive channel;
said geographical location information is correlated with said channel selecting apparatus; and
when said channel setting information storing unit correlates new said receive channel with said channel selecting position or when said geographical location information correlated with said channel selecting apparatus is updated, said dictionary generating unit automatically searches for, from said table, a unit of language representing the name, abbreviated name or common name of said broadcasting station transmitting a signal for said receive channel newly correlated with said channel selecting position and said geographical location information, then registers a searched word in said dictionary and accordingly updates said dictionary.

6. The channel selecting apparatus utilizing speech recognition according to any one of Claims 2 through 4, **characterized in that** said table which is unique to a service area of digital broadcasting is downloaded through said digital broadcasting.

7. A method of controlling a channel selecting apparatus utilizing speech recognition comprising:
a table in which a display channel is correlated with a unit of language which represents said display channel;
a channel setting information storing unit which stores a channel selecting position, a receive channel and a display channel in mutual correlation with each other; and
a dictionary containing a registration of a unit of language representing said display channel which is correlated with said channel selecting position,
said method being **characterized in** comprising:
a dictionary generating step of automatically searching for, when said channel setting information storing unit correlates new said display channel with said channel selecting position, a unit of language which represents said display channel newly correlated with said channel selecting position from said table, then registering a searched word in said dictionary and accordingly updating said dictionary;
a speech input step of inputting speech;
a speech recognition step of recognizing said speech inputted based on said dictionary, and outputting a recognition result; and
a channel selection control step of receiving a signal on said receive channel correlated with the same channel selecting position as said channel selecting position correlated with said display channel and then outputting said signal, when said recognition result is the unit of language which represents said display channel.

8. A method of controlling a channel selecting apparatus utilizing speech recognition comprising:
a table in which a receive channel is correlated with a unit of language which represents said receive channel;
a channel setting information storing unit which stores a channel selecting position and said receive channel in mutual correlation with each other; and
a dictionary containing a registration of a unit of language representing said receive channel which is correlated with said channel selecting position,
said method being **characterized in** comprising:
a dictionary generating step of automatically searching for, when said channel setting information storing unit correlates new said receive channel with said channel selecting position, a unit of language which represents said receive channel newly correlated with said channel selecting position from said table, then registering a searched word in said dictionary and accordingly updating said dictionary;
a speech input step of inputting speech;
a speech recognition step of recognizing said speech inputted based on said dictionary, and outputting a recognition result; and
a channel selection control step of receiving a signal on said receive channel and then outputting said signal, when said recognition result is the unit of language which represents said receive channel.

9. A method of controlling a channel selecting apparatus utilizing speech recognition comprising:
a table which correlates a broadcasting station identifier, a receive channel for a signal transmitted from a broadcasting station which is correlated with said broadcasting station identifier, and a unit of language which represents said broadcasting station identifier or a unit of language which represents the name, abbreviated name or common name of a broadcasting station which is correlated with said broadcasting station identifier with each other;
a channel setting information storing unit which stores a channel selecting position and said broadcasting station identifier in mutual correlation with each other; and
a dictionary containing a registration of a unit of language representing said broadcasting station identifier which is correlated with said channel selecting position or a unit of language representing the name, abbreviated name or common name of a broadcasting station correlated with said broadcasting station identifier which is correlated with said channel selecting position,
said method being **characterized in** comprising:
a dictionary generating step of automatically searching for, when said channel setting information storing unit correlates a new broadcasting station identifier with said channel selecting position, from said table, a unit of language which represents said broadcasting station identifier newly correlated with said channel selecting position or a unit of language representing the name, abbreviated name or common name of a broadcasting station correlated with said broadcasting station identifier newly correlated with said channel selecting position, then registering a searched word in said dictionary and accordingly updating said dictionary;
a speech input step of inputting speech;
a speech recognition step of recognizing said speech inputted based on said dictionary, and outputting a recognition result; and
a channel selection control step of receiving a signal on said receive channel correlated with said broadcasting station identifier and then outputting said signal, when said recognition result is the unit of language which represents said broadcasting station identifier or the unit of language representing the name, abbreviated name or common name of said broadcasting station correlated with said broadcasting station identifier.

10. A method of controlling a channel selecting apparatus utilizing speech recognition comprising:
a table which correlates a receive channel with the name, abbreviated name or common name of a broadcasting station transmitting a signal for said receive channel;
a channel setting information storing unit which stores a channel selecting position and said receive channel in mutual correlation with each other; and
a dictionary containing a registration of a unit of language which represents the name, abbreviated name or common name of said broadcasting station transmitting a signal for said receive channel correlated with said receive channel,
said method being **characterized in** comprising:
a dictionary generating step of automatically searching for, from said table, a unit of language representing the name, abbreviated name or common name of a broadcasting station transmitting a signal for said receive channel newly correlated with said channel selecting position, then registering a searched word in said dictionary and accordingly updating said dictionary, when said channel setting information storing unit correlates a new receive channel with said channel selecting position;
a speech input step of inputting speech;
a speech recognition step of recognizing said speech inputted based on said dictionary, and outputting a recognition result; and
a channel selection control step of receiving a signal on said receive channel and then outputting said signal, when said recognition result is the unit of language which represents the name, abbreviated name or common name of said broadcasting station transmitting a signal for said receive channel.

11. The method of controlling a channel selecting apparatus utilizing speech recognition according to Claim 10,
**characterized in that**
said table correlates, in mutual correlation with each other, said receive channel, geographical location information and the unit of language which represents the name, abbreviated name or common name of said broadcasting station transmitting a signal for said receive channel;
said geographical location information is correlated with said channel selecting apparatus; and
when said channel setting information storing unit correlates new said receive channel with said channel selecting position or when said geographical location information correlated with said channel selecting apparatus is updated, at said dictionary generating step, search is made within said table for a unit of language representing the name, abbreviated name or common name of a broadcasting station transmitting a signal for said receive channel newly correlated with said channel selecting position and said geographical location information, a searched word is then registered in said dictionary and said dictionary is accordingly updated.

12. The method of controlling a channel selecting apparatus utilizing speech recognition according to any one of Claims 8 through 10, **characterized in that** said table which is unique to a service area of digital broadcasting is downloaded through said digital broadcasting.

## Patentansprüche

1. Kanalauswählvorrichtung, die Spracherkennung verwendet, mit:
einer Tabelle (32), in welcher ein Anzeigekanal mit einer Spracheinheit korreliert ist, welche den Anzeigekanal repräsentiert;
einer Kanaleinstellungsinformationsspeichereinheit (51), welche eine Kanalauswählposition, einen Empfangskanal und einen Anzeigekanal in gegenseitiger Korrelation zueinander speichert;
einem Wörterbuch (30), welches eine Registrierung einer Spracheinheit aufweist, die den Anzeigekanal repräsentiert, welcher mit der Kanalauswählposition korreliert ist;
einer Wörterbuchgenerierungseinheit (31), welche, wenn die Kanaleinstellungsinformationsspeichereinheit den Anzeigekanal neu mit der Kanalauswählposition korreliert, automatisch nach einer Spracheinheit sucht, welche den Anzeigekanal repräsentiert, der neu mit der Kanalauswählposition von der Tabelle korreliert ist, dann ein gesuchtes Wort in dem Wörterbuch registriert und das Wörterbuch dementsprechend aktualisiert;
einer Spracheingabeeinheit (10) eines Eingebens von Sprache;
einer Spracherkennungseinheit (20), welche die eingegebene Sprache basierend auf dem Wörterbuch erkennt und ein Erkennungsergebnis ausgibt; und
einer Kanalauswählsteuereinheit (50), welche das Erkennungsergebnis empfängt, und wenn das Erkennungsergebnis die Spracheinheit ist, welche den Anzeigekanal repräsentiert, ein Signal für den Empfangskanal empfängt, welcher mit derselben Kanalauswählposition korreliert ist wie die Kanalauswählposition, die mit dem Anzeigekanal korreliert ist, und das Signal ausgibt.

2. Kanalauswählvorrichtung, die Spracherkennung verwendet, mit:
einer Tabelle (33), in welcher ein Empfangskanal mit einer Spracheinheit korreliert ist, welche den Empfangskanal repräsentiert;
einer Kanaleinstellungsinformationsspeichereinheit (51), welche eine Kanalauswählposition und den Empfangskanal in gegenseitiger Korrelation zueinander speichert;
einem Wörterbuch (30), welches eine Registrierung einer Spracheinheit aufweist, die den Empfangskanal repräsentiert, welcher mit der Kanalauswählposition korreliert ist;
einer Wörterbuchgenerierungseinheit (31), welche, wenn die Kanaleinstellungsinformationsspeichereinheit den Empfangskanal neu mit der Kanalauswählposition korreliert, automatisch nach einer Spracheinheit sucht, welche den Empfangskanal repräsentiert, welcher neu mit der Kanalauswählposition von der Tabelle korreliert ist, ein gesuchtes Wort in dem Wörterbuch registriert und das Wörterbuch entsprechend aktualisiert;
einer Spracheingabeeinheit (10) eines Eingebens von Sprache;
einer Spracherkennungseinheit (20), welche die eingegebene Sprache basierend auf dem Wörterbuch erkennt und ein Erkennungsergebnis ausgibt; und
einer Kanalauswählsteuereinheit (50), welche das Erkennungsergebnis empfängt, und wenn das Erkennungsergebnis die Spracheinheit ist, welche den Empfangskanal repräsentiert, ein Signal für den Empfangskanal empfängt und das Signal ausgibt.

3. Kanalauswählvorrichtung, die Spracherkennung verwendet, mit:
einer Tabelle (34), welche einen Sendestationsidentifizierer, einen Empfangskanal für ein Signal, welches von einer Sendestation übertragen wird, welche mit dem Sendestationsidentifizierer korreliert ist, und eine Spracheinheit, welche den Sendestationsidentifizierer repräsentiert, oder eine Spracheinheit mit einander korreliert, welche den Namen, abgekürzten Namen oder gebräuchlichen Namen einer Sendestation repräsentiert, welche mit dem Sendestationsidentifizierer korreliert ist;
einer Kanaleinstellungsinformationsspeichereinheit (51), welche eine Kanalauswählposition und den Sendestationsidentifizierer in gegenseitiger Korrelation zueinander speichert;
einem Wörterbuch (30), welches eine Registrierung einer Spracheinheit, welche den Sendestationsidentifizierer repräsentiert, welcher mit der Kanalauswählposition korreliert ist, oder einer Spracheinheit aufweist, die den Namen, abgekürzten Namen oder gebräuchlichen Namen einer Sendestation repräsentiert, die mit dem Sendestationsidentifizierer korreliert ist, welcher mit der Kanalauswählposition korreliert ist;
einer Wörterbuchgenerierungseinheit (31), welche, wenn die Kanaleinstellungsinformationsspeichereinheit den Sendestationsidentifizierer neu mit der Kanalauswählposition korreliert, automatisch nach, von der Tabelle, einer Spracheinheit, welche den Sendestationsidentifizierer repräsentiert, der neu mit der Kanalauswählposition korreliert ist, oder einer Spracheinheit sucht, die den Namen, abgekürzten Namen oder gebräuchlichen Namen einer Sendestation repräsentiert, der mit dem Sendestationsidentifizierer korreliert ist, der neu mit der Kanalauswählposition korreliert ist, dann ein gesuchtes Wort in dem Wörterbuch registriert und dementsprechend das Wörterbuch aktualisiert;
einer Spracheingabeeinheit (10) eines Eingebens von Sprache;
einer Spracherkennungseinheit (20), welche die eingegebene Sprache basierend auf dem Wörterbuch erkennt und ein Erkennungsergebnis ausgibt; und
einer Kanalauswählsteuereinheit (50), welche das Erkennungsergebnis empfängt, und wenn das Erkennungsergebnis die Spracheinheit, welche den Sendestationsidentifizierer repräsentiert, oder die Spracheinheit ist, die den Namen, abgekürzten Namen oder gebräuchlichen Namen der Sendestation repräsentiert, der mit dem Sendestationsidentifizierer korreliert ist, ein Signal für den Empfangskanal empfängt, welcher mit dem Sendestationsidentifizierer korreliert ist, und das Signal ausgibt.

4. Kanalauswählvorrichtung, die Spracherkennung verwendet, mit:
einer Tabelle (32), welche einen Empfangskanal mit dem Namen, abgekürzten Namen oder gebräuchlichen Namen einer Sendestation korreliert, die ein Signal für den Empfangskanal überträgt;
einer Kanaleinstellungsinformationsspeichereinheit (51), welche eine Kanalauswählposition und den Empfangskanal in gegenseitiger Korrelation zueinander speichert;
einem Wörterbuch (30), welches eine Registrierung einer Spracheinheit aufweist, welche den Namen, abgekürzten Namen oder gebräuchlichen Namen der Sendestation repräsentiert, welche ein Signal für den Empfangskanal überträgt, welcher mit der Kanalauswählposition korreliert ist;
einer Wörterbuchgenerierungseinheit (31), welche, wenn die Kanaleinstellungsinformationsspeichereinheit den Empfangskanal neu mit der Kanalauswählposition korreliert, automatisch nach, von der Tabelle, einer Spracheinheit sucht, die den Namen, abgekürzten Namen oder gebräuchlichen Namen einer Sendestation repräsentiert, die ein Signal für den Empfangskanal überträgt, der neu mit der Kanalauswählposition korreliert ist, dann ein gesuchtes Wort in dem Wörterbuch registriert und dementsprechend das Wörterbuch aktualisiert;
einer Spracheingabeeinheit (10) eines Eingebens von Sprache;
einer Spracherkennungseinheit (20), welche die eingegebene Sprache basierend auf dem Wörterbuch erkennt und ein Erkennungsergebnis ausgibt; und
einer Kanalauswättlsteuereinheit (50), welche das Erkennungsergebnis empfängt, und, wenn das Erkennungsergebnis die Spracheinheit, welche den Namen, abgekürzten Namen oder gebräuchlichen Namen der Sendestation repräsentiert, die ein Signal für den Empfangskanal überträgt, ist, ein Signal für den Empfangskanal empfängt und das Signal ausgibt.

5. Kanalauswählvorrichtung, die Spracherkennung verwendet, gemäß Anspruch 4, **gekennzeichnet dadurch, dass**
die Tabelle in gegenseitiger Korrelation zueinander den Empfangskanal, eine geografische Ortsinformation und die Spracheinheit korreliert, welche den Namen, abgekürzten Namen oder gebräuchlichen Namen der Sendestation repräsentiert, die ein Signal für den Empfangskanal überträgt;
die geografische Ortsinformation mit der Kanalauswählvorrichtung korreliert ist; und
wenn die Kanaleinstellungsinformationsspeichereinheit den Empfangskanal neu mit der Kanalauswählposition korreliert, oder wenn die geografische Ortsinformation, die mit der Kanalauswählvorrichtung korreliert ist, aktualisiert wird, sucht die Wörterbuchgenerierungseinheit automatisch, von der Tabelle, nach einer Spracheinheit, die den Namen, abgekürzten Namen oder gebräuchlichen Namen der Sendestation repräsentiert, die ein Signal für den Empfangskanal überträgt, welcher neu mit der Kanalauswählposition und der geografischen Ortsinformation korreliert ist, dann ein gesuchtes Wort in dem Wörterbuch registriert und dementsprechend das Wörterbuch aktualisiert.

6. Kanalauswählvorrichtung, die Spracherkennung verwendet, gemäß einem von Ansprüchen 2 bis 4, **dadurch gekennzeichnet, dass** die Tabelle, welche einem Dienstbereich eines digitalen Sendens einzigartig ist, durch das digitale Senden heruntergeladen wird.

7. Verfahren eines Steuerns einer Kanalauswählvorrichtung, die Spracherkennung verwendet, mit:
einer Tabelle, in welcher ein Anzeigekanal mit einer Spracheinheit korreliert ist, welche den Anzeigekanal repräsentiert;
einer Kanaleinstellungsinformationsspeichereinheit, welche eine Kanalauswählposition, einen Empfangskanal und einen Anzeigekanal in gegenseitiger Korrelation zueinander speichert; und
einem Wörterbuch, welches eine Registrierung einer Spracheinheit aufweist, die den Anzeigekanal repräsentiert, welcher mit der Kanalauswählposition korreliert ist;
wobei das Verfahren **gekennzeichnet ist durch** ein Aufweisen von:
einem Wörterbuchgenerierungsschritt eines automatischen Suchens nach, wenn die Kanaleinstellungsinformationsspeichereinheit den Anzeigekanal neu mit der Kanalauswählposition korreliert, einer Spracheinheit, welche den Anzeigekanal repräsentiert, der neu mit der Kanalauswählposition von der Tabelle korreliert ist, dann eines Registrierens eines gesuchtes Wort in dem Wörterbuch und ein dementsprechendes Aktualisieren des Wörterbuches;
einem Spracheingabeschritt eines Eingebens von Sprache;
einem Spracherkennungsschritt eines Erkennens der eingegebenen Sprache basierend auf dem Wörterbuch und eines Ausgebens eines Erkennungsergebnisses; und
einem Kanalauswählsteuerschritt eines Empfangens eines Signales an dem Empfangskanal, der mit derselben Kanalauswählposition korreliert ist wie die Kanalauswählposi.tion, die mit dem Anzeigekanal korreliert ist, und dann eines Ausgebens des Signales, wenn das Erkennungsergebnis die Spracheinheit ist, welche den Anzeigekanal repräsentiert.

8. Verfahren eines Steuerns einer Kanalauswählvorrichtung, die Spracherkennung verwendet, mit:
einer Tabelle, in welcher ein Empfangskanal mit einer Spracheinheit korreliert ist, welche den Empfangskanal repräsentiert;
einer Kanaleinstellungsinformationsspeichereinheit, welche eine Kanalauswählposition und den Empfangskanal in gegenseitiger Korrelation zueinander speichert; und
einem Wörterbuch, welches eine Registrierung einer Spracheinheit aufweist, die den Empfangskanal repräsentiert, welcher mit der Kanalauswählposition korreliert ist;
wobei das Verfahren **gekennzeichnet ist durch** ein Aufweisen von:
einem Wörterbuchgenerierungsschritt eines automatischen Suchens nach, wenn die Kanaleinstellungsiriforrnationsspeichereinheit den Empfangskanal neu mit der Kanalauswählposition korreliert, einer Spracheinheit, welche den Empfangskanal repräsentiert, welcher neu mit der Kanalauswählposition von der Tabelle korreliert ist, eines Registrierend eines gesuchten Wortes in dem Wörterbuch und eines entspreChenden Aktualisierens des Wörterbuchs;
einem Spracheingabeschritt eines Eingebens von Sprache;
einem Spracherkennungsschritt eines Erkennens der eingegebenen Sprache basierend auf dem Wörterbuch und eines Ausgebens eines Erkennungsergebnis; und
einem Kanalauswählsteuerschritt eines Empfangens eines Signales an dem Empfangskanal und dann eines Ausgebens des Signales, wenn das Erkennungsergebnis die Spracheinheit ist, welche den Empfangskanal repräsentiert.

9. Verfahren eines Steuerns einer Kanalauswählvorrichtung, die Spracherkennung verwendet, mit:
einer Tabelle, welche einen Sendestationsidentifizierer, einen Empfangskanal für ein Signal, welches von einer Sendestation übertragen wird, welche mit dem Sendestationsidentifizierer korreliert ist, und eine Spracheinheit, welche den Sendestationsidentifizierer repräsentiert, oder eine Spracheinheit mit einander korreliert, welche den Namen, abgekürzten Namen oder gebräuchlichen Namen einer Sendestation repräsentiert, welche mit dem Sendestationsidentifizierer korreliert ist;
einer Kanaleinstellungsinformationsspeichereinheit, welche eine Kanalauswählposition und den Sendestationsidentifizierer in gegenseitiger Korrelation zueinander speichert; und
einem Wörterbuch, welches eine Registrierung einer Spracheinheit, welche den Sendestationsidentifizierer repräsentiert, welcher mit der Kanalauswählposition korreliert ist, oder einer Spracheinheit aufweist, die den Namen, abgekürzten Namen oder gebräuchlichen Namen einer Sendestation repräsentiert, die mit dem Sendestationsidentifizierer korreliert ist, welcher mit der Kanalauswählposition korreliert ist;
wobei das Verfahren **gekennzeichnet ist durch** ein Aufweisen von
einem Wörterbuchgenerierungsschritt eines automatischen Suchens nach, wenn die Kanaleinstellungsinformationsspeichereinheit den Sendestationsidentifizierer neu mit der Kanalauswählposition korreliert, von der Tabelle, einer Spracheinheit, welche den Sendestationsidentifizierer repräsentiert, der neu mit der Kanalauswählposition korreliert ist, oder einer Spracheinheit, die den Namen, abgekürzten Namen oder gebräuchlichen Namen einer Sendestation repräsentiert, der mit dem Sendestationsidentifizierer korreliert ist, der neu mit der Kanalauswählposition korreliert ist, eines Registrierens eines gesuchten Wortes in dem Wörterbuch und eines dementsprechenden Aktualisierens des Wörterbuchs;
einem Spracheingabeschritt eines Eingebens von Sprache;
einem Spracherkennungsschritt eines Erkennens der eingegebenen Sprache basierend auf dem Wörterbuch und eines Ausgebens eines Erkennungsergebnisses; und
einem Kanalauswählsteuerschritt eines Empfangens eines Signales an dem Empfangskanal, der mit dem SendestationsidentiFzierer korreliert ist, und dann eines Ausgebens des Signales, wenn das Erkennungsergebnis die Spracheinheit, welche den Sendestationsidentifizierer repräsentiert, oder die Spracheinheit ist, die den Namen, abgekürzten Namen oder gebräuchlichen Namen der Sendestation repräsentiert, der mit dem Sendestationsidentifizierer korreliert ist.

10. Verfahren eines Steuerns einer Kanalauswählvorrichtung, die Spracherkennung verwendet, mit
einer Tabelle, welche einen Empfangskanal mit dem Namen, abgekürzten Namen oder gebräuchlichen Namen einer Sendestation korreliert, die ein Signal für den Empfangskanal überträgt;
einer Kanaleinstellungsinformationsspeichereinheit, welche eine Kanalauswählposition und den Empfangskanal in gegenseitiger Korrelation zueinander speichert;
einem Wörterbuch, welches eine Registrierung einer Spracheinheit aufweist, welche den Namen, abgekürzten Namen oder gebräuchlichen Namen der Sendestation repräsentiert, welche ein Signal für den Empfangskanal überträgt, welcher mit der Kanalauswählposition korreliert ist;
wobei das Verfahren **gekennzeichnet ist durch** ein Aufweisen von:
einem Wörterbuchgenerierungsschritt eines automatischen Suchens nach, von der Tabelle, einer Spracheinheit, die den Namen, abgekürzten Namen oder gebräuchlichen Namen einer Sendestation repräsentiert, die ein Signal für den Empfangskanal überträgt, der neu mit der Kanalauswählposition korreliert ist, dann eines Registrierens eines gesuchten Wortes in dem Wörterbuch und eines dementsprechenden Aktualisierens des Wörterbuches, wenn die Kanaleinstellungsinformationsspeichereinheit den Empfangskanal neu mit der Kanalauswählposition korreliert;
einem Spracheingabeschritt eines Eingebens von Sprache;
einem Spracherkennungsschritt eines Erkennens der eingegebenen Sprache basierend auf dem Wörterbuch und eines Ausgebens eines Erkennungsergebnisses; und
einem Kanalauswählsteuerschritt eines Empfangens eines Signales an dem Empfangskanal und dann eines Ausgebens des Signales, wenn das Erkennungsergebnis die Spracheinheit, welche den Namen, abgekürzten Namen oder gebräuchlichen Namen der Sendestation repräsentiert, die ein Signal für den Empfangskanal überträgt.

11. Verfahren eines Steuerns einer Kanalauswählvorrichtung, die Spracherkennung verwendet, nach Anspruch 10, **dadurch gekennzeichnet, dass**
die Tabelle in gegenseitiger Korrelation zueinander den Empfangskanal, eine geografische Ortsinformation und die Spracheinheit korreliert, welche den Namen, abgekürzten Namen oder gebräuchlichen Namen der Sendestation repräsentiert, die ein Signal für den Empfangskanal überträgt;
die geografische Ortsinformation mit der Kanalauswählvorrichtung korreliert ist; und
wenn die Kanaleinstellungsinformationsspeichereinheit den Empfangskanal neu mit der Kanalauswählposition korreliert, oder wenn die geografische Ortsinformation, die mit der Kanalauswählvorrichtung korreliert ist, aktualisiert wird, wird bei dem Wörterbuchgenerierungsschritt eine Suche innerhalb der Tabelle nach einer Spracheinheit durchgeführt, die den Namen, abgekürzten Namen oder gebräuchlichen Namen der Sendestation repräsentiert, die ein Signal für den Empfangskanal überträgt, welcher neu mit der Kanalauswählposition und der geografischen Ortsinformation korreliert ist, dann ein gesuchtes Wort in dem Wörterbuch registriert und dementsprechend das Wörterbuch aktualisiert.

12. Verfahren eines Steuerns einer Kanalauswählvorrichtung, die Spracherkennung verwendet, nach einem der Ansprüche 8 bis 10, **dadurch gekennzeichnet, dass** die Tabelle, welche einem Dienstbereich eines digitalen Sendens einzigartig ist, durch das digitale Senden heruntergeladen wird.

## Revendications

1. Appareil de sélection de canal utilisant une reconnaissance vocale, comprenant :
une table (32) dans laquelle un canal d'affichage est corrélé avec une unité de langage qui représente ledit canal d'affichage ;
une unité de stockage d'informations de définition de canal (51) qui stocke une position de sélection de canal, un canal de réception et un canal d'affichage en corrélation mutuelle les uns avec les autres ;
un dictionnaire (30) contenant un enregistrement d'une unité de langage représentant ledit canal d'affichage qui est corrélé avec ladite position de sélection de canal ;
une unité de génération de dictionnaire (31) qui, lorsque ladite unité de stockage d'informations de définition de canal corrèle un nouveau dit canal d'affichage avec ladite position de sélection de canal, recherche automatiquement une unité de langage qui représente ledit canal d'affichage nouvellement corrélé avec ladite position de sélection de canal dans ladite table, puis enregistre un mot recherché dans ledit dictionnaire et en conséquence met à jour ledit dictionnaire ;
une unité d'entrée vocale (10) d'entrée de parole ;
une unité de reconnaissance vocale (20) qui reconnaît ladite parole entrée sur la base dudit dictionnaire, et délivre en sortie un résultat de reconnaissance ; et
une unité de commande de sélection de canal (50) qui reçoit ledit résultat de reconnaissance, et lorsque ledit résultat de reconnaissance est l'unité de langage qui représente ledit canal d'affichage, reçoit un signal pour ledit canal de réception corrélé avec la même position de sélection de canal que ladite position de sélection de canal corrélée avec ledit canal d'affichage, et délivre en sortie ledit signal.

2. Appareil de sélection de canal utilisant une reconnaissance vocale, comprenant :
une table (33) dans laquelle un canal de réception est corrélé avec une unité de langage qui représente ledit canal de réception ;
une unité de stockage d'informations de définition de canal (51) qui stocke une position de sélection de canal et ledit canal de réception en corrélation mutuelle l'un avec l'autre ;
un dictionnaire (30) contenant un enregistrement d'une unité de langage représentant ledit canal de réception qui est corrélé avec ladite position de sélection de canal ;
une unité de génération de dictionnaire (31) qui, lorsque ladite unité de stockage d'informations de définition de canal corrèle un nouveau dit canal de réception avec ladite position de sélection de canal, recherche automatiquement une unité de langage qui représente ledit canal de réception nouvellement corrélé avec ladite position de sélection de canal dans ladite table, enregistre un mot recherché dans ledit dictionnaire et en conséquence met à jour ledit dictionnaire ;
une unité d'entrée vocale (10) d'entrée de parole ;
une unité de reconnaissance vocale (20) qui reconnaît ladite parole entrée sur la base dudit dictionnaire, et délivre en sortie un résultat de reconnaissance ; et
une unité de commande de sélection de canal (50) qui reçoit ledit résultat de reconnaissance, et lorsque ledit résultat de reconnaissance est l'unité de langage qui représente ledit canal de réception, reçoit un signal pour ledit canal de réception et délivre en sortie ledit signal.

3. Appareil de sélection de canal utilisant une reconnaissance vocale, comprenant :
une table (34) qui corrèle un identifiant de station de radiodiffusion, un canal de réception pour un signal transmis d'une station de radiodiffusion qui est corrélée avec ledit identifiant de station de radiodiffusion, et une unité de langage qui représente ledit identifiant de station de radiodiffusion ou une unité de langage qui représente le nom, le nom abrégé ou le nom courant d'une station de radiodiffusion qui est corrélée avec ledit identifiant de station de radiodiffusion les uns avec les autres ;
une unité de stockage d'informations de définition de canal (51) qui stocke une position de sélection de canal et ledit identifiant de station de radiodiffusion en corrélation mutuelle l'un avec l'autre ;
un dictionnaire (30) contenant un enregistrement d'une unité de langage représentant ledit identifiant de station de radiodiffusion qui est corrélé avec ladite position de sélection de canal ou d'une unité de langage représentant le nom, le nom abrégé ou le nom courant d'une station de radiodiffusion corrélée avec ledit identifiant de station de radiodiffusion qui est corrélé avec ladite position de sélection de canal ;
une unité de génération de dictionnaire (31) qui, lorsque ladite unité de stockage d'informations de définition de canal corrèle un nouveau dit identifiant de station de radiodiffusion avec ladite position de sélection de canal, recherche automatiquement, dans ladite table, une unité de langage qui représente ledit identifiant de station de radiodiffusion nouvellement corrélé avec ladite position de sélection de canal ou une unité de langage représentant le nom, le nom abrégé ou le nom courant d'une station de radiodiffusion corrélée avec ledit identifiant de station de radiodiffusion nouvellement corrélé avec ladite position de sélection de canal, puis enregistre un mot recherché dans ledit dictionnaire et en conséquence met à jour ledit dictionnaire ;
une unité d'entrée vocale (10) d'entrée de parole ;
une unité de reconnaissance vocale (20) qui reconnaît ladite parole entrée sur la base dudit dictionnaire, et délivre en sortie un résultat de reconnaissance ; et
une unité de commande de sélection de canal (50) qui reçoit ledit résultat de reconnaissance, et lorsque ledit résultat de reconnaissance est l'unité de langage qui représente ledit identifiant de station de radiodiffusion ou l'unité de langage représentant le nom, le nom abrégé ou le nom courant de ladite station de radiodiffusion corrélée avec ledit identifiant de station de radiodiffusion, reçoit un signal pour ledit canal de réception corrélé avec ledit identifiant de station de radiodiffusion et délivre en sortie ledit signal.

4. Appareil de sélection de canal utilisant une reconnaissance vocale, comprenant :
une table (32) qui corrèle un canal de réception avec le nom, le nom abrégé ou le nom courant d'une station de radiodiffusion transmettant un signal pour ledit canal de réception ;
une unité de stockage d'informations de définition de canal (51) qui stocke une position de sélection de canal et ledit canal de réception en corrélation mutuelle l'un avec l'autre ;
un dictionnaire (30) contenant un enregistrement d'une unité de langage qui représente le nom, le nom abrégé ou le nom courant de ladite station de radiodiffusion transmettant un signal pour ledit canal de réception corrélé avec ladite position de sélection de canal ;
une unité de génération de dictionnaire (31) qui, lorsque ladite unité de stockage d'informations de définition de canal corrèle un nouveau dit canal de réception avec ladite position de sélection de canal, recherche automatiquement, dans la table, une unité de langage représentant le nom, le nom abrégé ou le nom courant d'une station de radiodiffusion transmettant un signal pour ledit canal de réception nouvellement corrélé avec ladite position de sélection de canal, puis enregistre un mot recherché dans ledit dictionnaire et en conséquence met à jour ledit dictionnaire ;
une unité d'entrée vocale (10) d'entrée de parole ;
une unité de reconnaissance vocale (20) qui reconnaît ladite parole entrée sur la base dudit dictionnaire, et délivre en sortie un résultat de reconnaissance ; et
une unité de commande de sélection de canal (50) qui reçoit ledit résultat de reconnaissance, et lorsque ledit résultat de reconnaissance est l'unité de langage qui représente le nom, le nom abrégé ou le nom courant de ladite station de radiodiffusion transmettant un signal pour ledit canal de réception, reçoit un signal pour ledit canal de réception et délivre en sortie ledit signal.

5. Appareil de sélection de canal utilisant une reconnaissance vocale selon la revendication 4, **caractérisé en ce que**
ladite table corrèle, en corrélation mutuelle les uns avec les autres, ledit canal de réception, les informations d'emplacement géographique et l'unité de langage qui représente le nom, le nom abrégé ou le nom courant de ladite station de radiodiffusion transmettant un signal pour ledit canal de réception ;
lesdites informations d'emplacement géographique sont corrélées avec ledit appareil de sélection de canal ; et
lorsque ladite unité de stockage d'informations de définition de canal corrèle un nouveau dit canal de réception avec ladite position de sélection de canal ou lorsque lesdites informations d'emplacement géographique corrélées avec ledit appareil de sélection de canal sont mises à jour, ladite unité de génération de dictionnaire recherche automatiquement, dans ladite table, une unité de langage représentant le nom, le nom abrégé ou le nom courant de ladite station de radiodiffusion transmettant un signal pour ledit canal de réception nouvellement corrélé avec ladite position de sélection de canal et lesdites informations d'emplacement géographique, puis enregistre un mot recherché dans ledit dictionnaire et en conséquence met à jour ledit dictionnaire.

6. Appareil de sélection de canal utilisant une reconnaissance vocale selon l'une quelconque des revendications 2 à 4, **caractérisé en ce que** ladite table qui est unique pour une zone de service de radiodiffusion numérique est chargée par l'intermédiaire de ladite radiodiffusion numérique.

7. Procédé de commande d'un appareil de sélection de canal utilisant une reconnaissance vocale comprenant :
une table dans laquelle un canal d'affichage est corrélé avec une unité de langage qui représente ledit canal d'affichage ;
une unité de stockage d'informations de définition de canal qui stocke une position de sélection de canal, un canal de réception et un canal d'affichage en corrélation mutuelle les uns avec les autres ; et
un dictionnaire contenant un enregistrement d'une unité de langage représentant ledit canal d'affichage qui est corrélé avec ladite position de sélection de canal,
ledit procédé étant **caractérisé en ce que** comprenant :
une étape de génération de dictionnaire de recherche automatique, lorsque ladite unité de stockage d'informations de définition de canal corrèle un nouveau dit canal d'affichage avec ladite position de sélection de canal, d'une unité de langage qui représente ledit canal d'affichage nouvellement corrélé avec ladite position de sélection de canal dans ladite table, ensuite d'enregistrement d'un mot recherché dans ledit dictionnaire et en conséquence de mise à jour dudit dictionnaire ;
une étape d'entrée vocale d'entrée de parole ;
une étape de reconnaissance vocale de reconnaissance de ladite parole entrée sur la base dudit dictionnaire, et de délivrance en sortie d'un résultat de reconnaissance ; et
une étape de commande de sélection de canal de réception d'un signal sur ledit canal de réception corrélé avec la même position de sélection de canal que ladite position de sélection de canal corrélée avec ledit canal d'affichage et ensuite de délivrance en sortie dudit signal, lorsque ledit résultat de reconnaissance est l'unité de langage qui représente ledit canal d'affichage.

8. Procédé de commande d'un appareil de sélection de canal utilisant une reconnaissance vocale comprenant :
une table dans laquelle un canal de réception est corrélé avec une unité de langage qui représente ledit canal de réception ;
une unité de stockage d'informations de définition de canal qui stocke une position de sélection de canal et ledit canal de réception en corrélation mutuelle l'un avec l'autre ; et
un dictionnaire contenant un enregistrement d'une unité de langage représentant ledit canal de réception qui est corrélé avec ladite position de sélection de canal,
ledit procédé étant **caractérisé en ce que** comprenant :
une étape de génération de dictionnaire de recherche automatique, lorsque ladite unité de stockage d'informations de définition de canal corrèle un nouveau dit canal de réception avec ladite position de sélection de canal, d'une unité de langage qui représente ledit canal de réception nouvellement corrélé avec ladite position de sélection de canal dans ladite table, ensuite d'enregistrement d'un mot recherché dans ledit dictionnaire et en conséquence de mise à jour dudit dictionnaire ;
une étape d'entrée vocale d'entrée de parole ;
une étape de reconnaissance vocale de reconnaissance de ladite parole entrée sur la base dudit dictionnaire, et de délivrance en sortie d'un résultat de reconnaissance ; et
une étape de commande de sélection de canal de réception d'un signal sur ledit canal de réception et ensuite de délivrance en sortie dudit signal, lorsque ledit résultat de reconnaissance est l'unité de langage qui représente ledit canal de réception.

9. Procédé de commande d'un appareil de sélection de canal utilisant une reconnaissance vocale comprenant :
une table qui corrèle un identifiant de station de radiodiffusion, un canal de réception pour un signal transmis d'une station de radiodiffusion qui est corrélée avec ledit identifiant de station de radiodiffusion, et une unité de langage qui représente ledit identifiant de station de radiodiffusion ou une unité de langage qui représente le nom, le nom abrégé ou le nom courant d'une station de radiodiffusion qui est corrélée avec ledit identifiant de station de radiodiffusion les uns avec les autres ;
une unité de stockage d'informations de définition de canal qui stocke une position de sélection de canal et ledit identifiant de station de radiodiffusion en corrélation mutuelle l'un avec l'autre ; et
un dictionnaire contenant un enregistrement d'une unité de langage représentant ledit identifiant de station de radiodiffusion qui est corrélé avec ladite position de sélection de canal ou d'une unité de langage représentant le nom, le nom abrégé ou le nom courant d'une station de radiodiffusion corrélée avec ledit identifiant de station de radiodiffusion qui est corrélé avec ladite position de sélection de canal,
ledit procédé étant **caractérisé en ce que** comprenant :
une étape de génération de dictionnaire de recherche automatique, lorsque ladite unité de stockage d'informations de définition de canal corrèle un nouvel identifiant de station de radiodiffusion avec ladite position de sélection de canal, dans ladite table, d'une unité de langage qui représente ledit identifiant de station de radiodiffusion nouvellement corrélé avec ladite position de sélection de canal ou d'une unité de langage représentant le nom, le nom abrégé ou le nom courant d'une station de radiodiffusion corrélée avec ledit identifiant de station de radiodiffusion nouvellement corrélé avec ladite position de sélection de canal, ensuite d'enregistrement d'un mot recherché dans ledit dictionnaire et en conséquence de mise à jour dudit dictionnaire ;
une étape d'entrée vocale d'entrée de parole ;
une étape de reconnaissance vocale de reconnaissance de ladite parole entrée sur la base dudit dictionnaire, et de délivrance en sortie d'un résultat de reconnaissance ; et
une étape de commande de sélection de canal de réception d'un signal sur ledit canal de réception corrélé avec ledit identifiant de station de radiodiffusion et ensuite de délivrance en sortie dudit signal, lorsque ledit résultat de reconnaissance est l'unité de langage qui représente ledit identifiant de station de radiodiffusion ou l'unité de langage représentant le nom, le nom abrégé ou le nom courant de ladite station de radiodiffusion corrélée avec ledit identifiant de station de radiodiffusion.

10. Procédé de commande d'un appareil de sélection de canal utilisant une reconnaissance vocale comprenant :
une table qui corrèle un canal de réception avec le nom, le nom abrégé ou le nom courant d'une station de radiodiffusion transmettant un signal pour ledit canal de réception ;
une unité de stockage d'informations de définition de canal qui stocke une position de sélection de canal et ledit canal de réception en corrélation mutuelle l'un avec l'autre ; et
un dictionnaire contenant un enregistrement d'une unité de langage qui représente le nom, le nom abrégé ou le nom courant de ladite station de radiodiffusion transmettant un signal pour ledit canal de réception corrélé avec ladite position de sélection de canal,
ledit procédé étant **caractérisé en ce que** comprenant :
une étape de génération de dictionnaire de recherche automatique, dans ladite table, d'une unité de langage représentant le nom, le nom abrégé ou le nom courant d'une station de radiodiffusion transmettant un signal pour ledit canal de réception nouvellement corrélé avec ladite position de sélection de canal, puis d'enregistrement d'un mot recherché dans ledit dictionnaire et en conséquence de mise à jour dudit dictionnaire, lorsque ladite une unité de stockage d'informations de définition de canal corrèle un nouveau canal de réception avec ladite position de sélection de canal ;
une étape d'entrée vocale d'entrée de parole ;
une étape de reconnaissance vocale de reconnaissance de ladite parole entrée sur la base dudit dictionnaire, et de délivrance en sortie d'un résultat de reconnaissance ; et
une étape de commande de sélection de canal de réception d'un signal sur ledit canal de réception et ensuite de délivrance en sortie dudit signal, lorsque ledit résultat de reconnaissance est l'unité de langage qui représente le nom, le nom abrégé ou le nom courant de ladite station de radiodiffusion transmettant un signal pour ledit canal de réception.

11. Procédé de commande d'un appareil de sélection de canal utilisant une reconnaissance vocale selon la revendication 10, **caractérisé en ce que**
ladite table corrèle, en corrélation mutuelle les uns avec les autres, ledit canal de réception, les informations d'emplacement géographique et l'unité de langage qui représente le nom, le nom abrégé ou le nom courant de ladite station de radiodiffusion transmettant un signal pour ledit canal de réception ;
lesdites informations d'emplacement géographique sont corrélées avec ledit appareil de sélection de canal ; et
lorsque ladite unité de stockage d'informations de définition de canal corrèle un nouveau dit canal de réception avec ladite position de sélection de canal ou lorsque lesdites informations d'emplacement géographique corrélées avec ledit appareil de sélection de canal sont mises à jour, à ladite étape de génération de dictionnaire, une recherche est effectuée dans ladite table d'une unité de langage représentant le nom, le nom abrégé ou le nom courant d'une station de radiodiffusion transmettant un signal pour ledit canal de réception nouvellement corrélé avec ladite position de sélection de canal et lesdites informations d'emplacement géographique, un mot recherché est ensuite enregistré dans ledit dictionnaire et ledit dictionnaire est en conséquence mis à jour.

12. Procédé de commande d'un appareil de sélection de canal utilisant une reconnaissance vocale selon l'une quelconque des revendications 8 à 10, **caractérisé en ce que** ladite table qui est unique pour une zone de service de radiodiffusion numérique est chargée par l'intermédiaire de ladite radiodiffusion numérique.
